# EUROPÄISCHE PATENTANMELDUNG

(11) **EP 2 103 216 A1**
(43) Veröffentlichungstag der Anmeldung: **23.09.2009**
(21) Anmeldenummer: 08005143.6
(22) Anmeldetag: 19.03.2008
(51) Int. Cl.: A01N 47/36, A01P 13/02

(54) **Ausgewählte Salze des 3-(5,6-dihydro-1,4,2-dioxazin-3-yl)-N-[(4,6-dimethoxypyrimidin-2-yl)carbamoyl] pyridin-2-sulfonamids, Verfahren zur deren Herstellung, sowie deren Verwendung als Herbizide und Pflanzenwachstumsregulatoren**

(71) Anmelder: Bayer CropScience AG, 40789 Monheim (DE)
(72) Erfinder: Müller, Klaus-Helmut, Dr., 40593 Düsseldorf (DE); Waldraff, Christian, Dr., 61118 Bad Vilbel (DE); Gesing, R. F. Ernst, Dr., 40699 Erkrath-Hochdahl (DE); Philipp, Ulrich, Dr., 51375 Leverkusen (DE); Krähmer, Hansjörg, Dr., 65719 Hofheim (DE); Hills, Martin, 65510 Idstein (DE); Feucht, Dieter, Dr., 65760 Eschborn (DE)

(57) **Zusammenfassung**

Diese Erfindung betrifft ausgewählte Salze des 3-(5,6-Dihydro-1,4,2-dioxazin-3-yl)-N-[(4,6-dimethoxypyrimidin-2-yl)carbamoyl]pyridin-2-sulfonamids, Verfahren zu deren Herstellung, sowie deren Verwendung als Herbizide, insbesondere als Herbizide zur selektiven Bekämpfung unerwünschter Schadpflanzen in Leguminosen, oder zur nicht-selektiven Bekämpfung unerwünschter Schadpflanzen in Nichtkulturland, sowie als Pflanzenwachstumsregulatoren allein, oder mit Safenern und/oder in Kombination mit anderen Herbiziden, deren Anwendung zur Bekämpfung unerwünschter Schadpflanzen (wie beispielsweise Unkräuter/Ungräser) in speziellen Pflanzenkulturen oder als Pflanzenschutzregulatoren bekannt ist, bei gleichzeitiger und/oder sequentieller Anwendung, entweder als Fertigformulierung oder als Tankmix.

## Beschreibung

Diese Erfindung betrifft ausgewählte Salze des 3-(5,6-Dihydro-1,4,2-dioxazin-3-yl)-N-[(4,6-dimethoxypyrimidin-2-yl)carbamoyl]pyridin-2-sulfonamids, Verfahren zu deren Herstellung, sowie deren Verwendung als Herbizide, insbesondere als Herbizide zur selektiven Bekämpfung unerwünschter Schadpflanzen in Leguminosen, oder zur nicht-selektiven Bekämpfung in Nichtkulturland oder Plantagenkulturen, sowie als Pflanzenwachstumsregulatoren allein, oder mit Safenern und/oder in Kombination mit anderen Herbiziden, deren Anwendung zur Bekämpfung unerwünschter Schadpflanzen (wie beispielsweise Unkräuter/Ungräser) in speziellen Pflanzenkulturen oder als Pflanzenschutzregulatoren bekannt ist, bei gleichzeitiger und/oder sequentieller Anwendung, entweder als Fertigformulierung oder als Tankmix.

Aus der Druckschrift US 5,476,936 sind bestimmte herbizid wirksame N-Azinyl-N'-(Het)-Arylsulfonylharnstoffe bekannt, die auch die Gruppe der 3-(5,6-Dihydro-1,4,2-dioxazin-3-yl)-N-[pyrimidin-2-yl)carbamoyl]pyridin-2-sulfonamide umfassen. US 5,476,936 beschreibt auch Na-Salze einiger darin genannter Verbindungen, u.a. Na-Salze einzelner 3-(5,6-Dihydro-1,4,2-dioxazin-3-yl)-N-[pyrimidin-2-yl)carbamoyl]pyridin-2-sulfonamide, wie des 3-(5,6-Dihydro-1,4,2-dioxazin-3-yl)-N-[4,6-dimethoxypyrimidin-pyrimidin-2-yl)carbamoyl]pyridin-2-sulfonamids. Die Wirksamkeit dieser Herbizide gegen Schadpflanzen liegt auf einem hohen Niveau, hängt jedoch im allgemeinen von der Aufwandmenge, der jeweiligen Zubereitungsform, den jeweils zu bekämpfenden Schadpflanzen oder dem Schadpflanzenspektrum, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt durch höhere Aufwandmengen der Herbizide ausgleichen, z.B. weil damit die Selektivität der Herbizide reduziert wird oder eine Wirkungsverbesserung auch bei höherer Aufwandmenge nicht eintritt. Aus WO 2005/092104 ist auch bereits die nicht-selektive Verwendung einiger der in US 5,476,963 beschriebenenen herbizid wirksamen N-Azinyl-N'-(Het)arylsulfonylharnstoffe, im besonderen aus der Gruppe der 3-(5,6-Dihydro-1,4,2-dioxazin-3-yl)-N-[pyrimidin-2-yl)carbamoyl]pyridin-2-sulfonamide, sowie deren selektive Verwendung zur Unkrautbekämpfung in Leguminosen bekannt.

Überraschenderweise wurde nun gefunden, dass bestimmte ausgewählte Salze des 3-(5,6-Dihyd ro-1,4,2-dioxazin-3-yl)-N-[(4,6-dimethoxypyrimidin-2-yl)carbamoyl]pyridin-2-sulfonamids sich besonders vorteilhaft als Herbizide und/oder Pflanzenwachstumsregulatoren eignen.

Gegenstand der vorliegenden Erfindung sind somit bestimmte agrochemisch wirksame Salze des 3-(5,6-Dihydro-1,4,2-dioxazin-3-yl)-N-[(4,6-dimethoxypyrimidin-2-yl)carbamoyl]pyridin-2-sulfonamids.

Gegenstand der vorliegenden Erfindung sind somit Verbindungen der allgemeinen Formel (I) 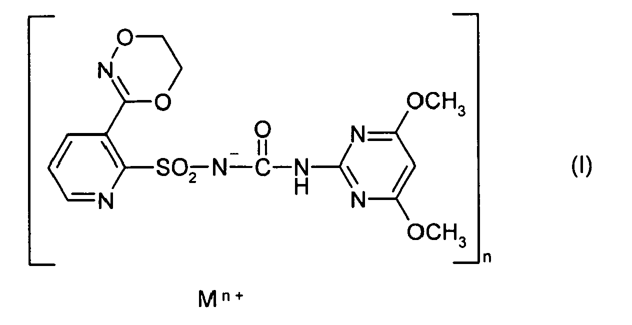 wobei
das Kation M
(a) ein Lithium- oder Kalium-lon, oder
(b) ein lon der Erdalkalimetalle, bevorzugt Calcium und Magnesium, oder
(c) ein lon der Übergangsmetalle, bevorzugt Mangan, Kupfer, Zink und Eisen, oder
(d) ein Ammonium-Ion, bei dem gegebenenfalls ein, zwei, drei oder alle vier Wasserstoffatome, durch gleiche oder verschiedene Reste aus der Gruppe (C₁-C₄)-Alkyl, Hydroxy-(C₁-C₄)-alkyl, acyliertes Hydroxy-(C₁-C₄)-alkyl, (C₃-C₆)-Cycloalkyl, (C₁-C₄)-Alkoxy-(C₁-C₄)-alkyl, Hydroxy-(C₁-C₄)-alkoxy-(C₁-C₄)-alkyl, (C₁-C₆)-Mercaptoalkyl, Phenyl oder Benzyl substituiert sind, wobei die zuvor genannten Reste gegebenenfalls durch einen oder mehrere, gleiche oder verschiedene Reste aus der Gruppe Halogen, wie F, Cl, Br oder I, Nitro, Cyano, Azido, (C₁-C₆)-Alkyl, (C₁-C₆)-Haloalkyl, (C₃-C₆)-Cycloalkyl, (C₁-C₆)-Alkoxy, (C₁-C₆)-Haloalkoxy und Phenyl substituiert sind, und wobei jeweils zwei Substituenten am N-Atom zusammen gegebenfalls einen unsubstituierten oder substituierten Ring bilden, oder
(e) ein Phosphonium-lon, oder
(f) ein Sulfonium-Ion, oder
(g) ein Oxonium-Ion, oder
(h) eine gegebenenfalls einfach oder mehrfach annellierte und/oder durch (C₁-C₄)-Alkyl substituierte gesättigte oder ungesättigte/aromatische N-haltige heterocyclische ionische Verbindung mit 1-10 C-Atomen im Ringsystem
ist,
und n einer Zahl 1, 2 oder 3 entspricht.

Weiter bevorzugt sind Verbindungen der Formel (I), in denen das Kation M
(a) ein Lithium- oder Kalium-lon, oder
(b) ein lon der Erdalkalimetalle, bevorzugt Calcium und Magnesium, oder
(c) ein lon der Übergangsmetalle, bevorzugt Mangan, Kupfer, Zink und Eisen, oder
(d) ein Ammonium-lon, bei dem gegebenenfalls ein, zwei, drei oder alle vier Wasserstoffatome, durch gleiche oder verschiedene Reste aus der Gruppe (C₁-C₄)-Alkyl, Hydroxy-(C₁-C₄)-alkyl, acyliertes Hydroxy-(C₁-C₄)-alkyl, (C₃-C₄)-Cycloalkyl, (C₁-C₂)-Alkoxy-(C₁-C₂)-alkyl, Hydroxy-(C₁-C₂)-alkoxy-(C₁-C₂)-alkyl, (C₁-C₂)-Mercaptoalkyl, Phenyl oder Benzyl substituiert sind, wobei die zuvor genannten Reste gegebenenfalls durch einen oder mehrere, gleiche oder verschiedene Reste aus der Gruppe Halogen, wie F, Cl, Br oder I, Nitro, Cyano, Azido, (C₁-C₂)-Alkyl, (C₁-C₂)-Haloalkyl, (C₃-C₄)-Cycloalkyl, (C₁-C₂)-Alkoxy, (C₁-C₂)-Haloalkoxy und Phenyl substituiert sind, und wobei jeweils zwei Substituenten am N-Atom zusammen gegebenfalls einen unsubstituierten oder substituierten Ring bilden, oder
(e) ein quartäres Phosphonium-lon, bevorzugt Tetra-((C₁-C₄)-alkyl)-phosphonium und Tetraphenyl-phosphonium, wobei die (C₁-C₄)-Alkylreste und die Phenylreste gegebenenfalls einfach oder mehrfach mit gleichen oder verschiedenen Resten aus der Gruppe Halogen, wie F, Cl, Br oder I, (C₁-C₂)-Alkyl, (C₁-C₂)-Haloalkyl, (C₃-C₄)-Cycloalkyl, (C₁-C₂)-Alkoxy und (C₁-C₂)-Haloalkoxy substituiert sind, oder
(f) ein tertiäres Sulfonium-lon, bevorzugt Ti-((C₁-C₄)-alkyl)-sulfonium oder Triphenyl-sulfonium, wobei die (C₁-C₄)-Alkylreste und die Phenylreste gegebenenfalls einfach oder mehrfach mit gleichen oder verschiedenen Resten aus der Gruppe Halogen, wie F, Cl, Br oder I, (C₁-C₂)-Alkyl, (C₁-C₂)-Haloalkyl, (C₃-C₄)-Cycloalkyl, (C₁-C₂)-Alkoxy und (C₁-C₂)-Haloalkoxy substituiert sind, oder
(g) ein tertiäres Oxonium-lon, bevorzugt Tri-((C₁-C₄)-alkyl)-oxonium, wobei die (C₁-C₄)-Alkylreste gegebenenfalls einfach oder mehrfach mit gleichen oder verschiedenen Resten aus der Gruppe Halogen, wie F, Cl, Br oder I, (C₁-C₂)-Alkyl, (C₁-C₂)-Haloalkyl, (C₃-C₄)-Cycloalkyl, (C₁-C₂)-Alkoxy und (C₁-C₂)-Haloalkoxy substituiert sind, oder
(h) ein Kation aus der Reihe der folgenden heterocyclischen Verbindungen, wie beispielsweise Pyridin, Chinolin, 2-Methylpyridin, 3-Methylpyridin, 4-Methylpyridin, 2,4-Dimethylpyridin, 2,5-Dimethylpyridin, 2,6-Dimethylpyridin, 5-Ethyl-2-methylpyridin, Piperidin, Pyrrolidin, Morpholin, Thiomorpholin, Pyrrol, Imidazol, 1,5-Diazabicyclo[4.3.0]non-5-en (DBN), 1,8-Diazabicyclo[5.4.0]undec-7-en (DBU)
ist,
und n einer Zahl 1, 2 oder 3 entspricht.

Bevorzugt sind Verbindungen der Formel (I), in denen das Kation M ein Kalium Ion, ein Lithium-Ion, ein Magnesium-Ion, ein Calcium-Ion, ein NH₄⁺-Ion, ein (2 Hydroxyeth-1-yl)ammonium-Ion, Bis-N,N-(2-hydroxyeth-1-yl)ammonium-Ion, Tris-N,N,N-(2-hydroxyeth-1-yl)ammonium-Ion, ein Methylammonium-Ion, ein Dimethylammonium-Ion, ein Trimethylammonium-Ion, ein Tetramethylammonium-Ion ein Ethylammonium-Ion, ein Diethylammonium-lon, ein Triethylammonium-Ion, ein Tetraethylammonium-Ion, ein Isopropylammonium-lon, ein Diisopropylammonium-Ion, ein Tetrapropylammonium-lon, ein Tetrabutylammonium Ion, ein 2-(2-Hydroxyeth-1-oxy)eth-1-yl-ammonium-Ion, ein Di-(2-hydroxyeth-1-yl) ammonium-Ion, ein Trimethylbenzylammonium-Ion, ein Tri-((C₁-C₄)-alkyl)-sulfonium-Ion, oder ein Tri-((C₁-C₄)-alkyl)-oxonium-Ion, ein Benzylammonium-lon, ein 1 Phenylethylammonium-Ion, ein 2-Phenylethylammonium-Ion, ein Diisopropylethylammonium-Ion, ein Pyridinium-Ion, ein Piperidinium-Ion, ein Imidazolium-lon, ein Morpholinium-lon, ein 1,8-Diazabicyclo[5.4.0]undec-7-enium-Ion, ein Diethanolammonium-lon, ein Ethanolammonium-lon, ein Trisethanolammonium-Ion, ein Cholinium-Ion, ein Chlorcholinium-lon, oder ein Acetylcholinium-lon ist, und n einer Zahl 1 oder 2 entspricht.

Weiter bevorzugt sind Verbindungen der Formel (I) in denen das Kation M ein Kalium-Ion, Lithium-lon, ein Magnesium-Ion, ein Calcium-lon, oder ein NH₄⁺-lon ist. Besonders bevorzugt sind Verbindungen der Formel (I), in denen das Kation M ein Kalium-Ion, Lithium-lon oder ein NH₄⁺-lon ist, und n einer Zahl 1 oder 2 entspricht

Besonders bevorzugt sind Verbindungen der Formel (I), in denen das Kation M ein Kalium-Ion oder Lithium-lon ist, und n gleich 1 ist.

Ganz besonders bevorzugt sind Verbindungen der Formel (I), in denen das Kation M ein Kalium-lon ist, und n gleich 1 ist.

In Formel (I) und allen nachfolgenden Formeln können die kohlenstoffhaltigen Reste wie Alkyl, Alkoxy jeweils geradkettig oder verzweigt sein z.B. Methyl, Ethyl, n- oder i-Propyl, n-, i-, t- oder 2-Butyl.

Cycloalkyl bedeutet ein carbocyclisches, gesättigtes Ringsystem mit vorzugsweise 3-6 C-Atomen, z.B. Cyclopropyl, Cyclobutyl, Cyclopentyl oder Cyclohexyl.

Gegenstand der Erfindung sind auch alle Stereoisomeren, die von erfindungsgemäßen Verbindungen der Formel (I) umfasst sind, und deren Gemische. Die durch ihre spezifische Raumform definierten möglichen Stereoisomere, wie Enantiomere, Diastereomere, Z- und E-Isomere sind alle von der Formel (I) umfasst.

Sind beispielsweise eine oder mehrere Alkenylgruppen vorhanden, so können Diastereomere (Z- und E-Isomere) auftreten. Sind beispielsweise ein oder mehrere asymmetrische Kohlenstoffatome vorhanden, so können Enantiomere und Diastereomere auftreten. Stereoisomere lassen sich aus den bei der Herstellung anfallenden Gemischen nach üblichen Trennmethoden erhalten. Ebenso können Stereoisomere durch Einsatz stereoselektiver Reaktionen unter Verwendung optisch aktiver Ausgangs- und/oder Hilfsstoffe selektiv hergestellt werden. Die Erfindung betrifft somit auch alle Stereoisomeren, die von der allgemeinen Formel (I) umfasst, jedoch nicht mit ihrer spezifischen Stereoform angegeben sind, sowie deren Gemische.

Die vorstehenden Beispiele für Reste oder Restebereiche, die unter die allgemeinen Begriffe wie "Alkyl" fallen, bedeuten keine vollständige Aufzählung. Die allgemeinen Begriffe umfassen auch die weiter unten angeführten Definitionen für Restebereiche in Gruppen bevorzugter Verbindungen, insbesondere Restebereiche, welche spezifische Reste aus den Tabellenbeispielen umfassen.

Die oben aufgeführten allgemeinen oder in Vorzugsbereichen aufgeführten Restedefinitionen gelten sowohl für die Endprodukte der Formel (I) als auch entsprechend für die jeweils zur Herstellung benötigten Ausgangs- oder Zwischenprodukte. Diese Restedefinitionen können untereinander, also auch zwischen den angegebenen bevorzugten Bereichen beliebig kombiniert werden.

Gegenstand der vorliegenden Erfindung sind auch Verfahren zur Herstellung der erfindungsgemäßen Salze, insbesondere von Verbindungen der allgemeinen Formel (I), dadurch gekennzeichnet, dass die korrespondierende freie Säure (Neutralverbindung) zur allgemeinen Formel (I), worin die Gruppe N-M⁺ durch NH ersetzt ist, mit einer entsprechenden Base umgesetzt wird.

Der erfindungsgemäßen Salze der Formel (I) können in der oben benannten Art nach an sich bekannten Verfahren, vgl. hierzu die in EP 521500 und WO 2000/044227 (S.24 bis 27) dargestellten Verfahrensschritte, hergestellt werden,

Man führt die Reaktion beispeilsweise in Gegenwart von unter den Reaktionsbedingungen inerten Lösungsmitteln durch. Geeignete Lösungsmittel sind anorganische Lösungmittel wie Wasser oder organische Lösungsmittel, z.B. Alkohole, wie z.B. Methanol oder Ethanol, halogenierte Kohlenwasserstoffe, wie Dichlormethan, Ether, wie Tetrahydrofuran oder Dioxan, Ketone, wie Aceton oder MIBK (Methylisobutylketon), Amide wie DMF, Nitrile wie Acetonitril und Sulfoxide, wie DMSO. Die Reaktionstemperaturen liegen im Allgemeinen zwischen 0 °C und dem Siedepunkt des Lösungsmittels. Die Produkte der allgemeinen Formel (I) können in praktisch quantitativer Ausbeute und guter Reinheit in manchen Fällen direkt durch Abfiltrieren oder, wenn sie gut löslich sind, nach destillativer Entfernung der Lösungsmittel isoliert werden.

Kollektionen aus erfindungsgemäßen Verbindungen der Formel (I), die nach den oben genannten Reaktionen synthetisiert werden können, können auch in parallelisierter Weise hergestellt werden, wobei dies in manueller, teilweise automatisierter oder vollständig automatisierter Weise geschehen kann. Dabei ist es beispielsweise möglich, die Reaktionsdurchführung, die Aufarbeitung oder die Reinigung der Produkte bzw. Zwischenstufen zu automatisieren. Insgesamt wird hierunter eine Vorgehensweise verstanden, wie sie beispielsweise durch S.H. DeWitt in "Annual Reports in Combinatorial Chemistry and Molecular Diversity: Automated Synthesis", Band 1, Verlag Escom 1997, Seite 69 bis 77 beschrieben ist.

Für die Durchführung mikrowellenunterstützter Synthesen kann ein Mikrowellengerät, z.B. Modell "Discover" der Firma CEM GmbH Mikrowellen-Analysentechnik, Carl-Friedrich-Gauß-Str. 9, 47475 Kamp-Lintfort verwendet werden.

Zur parallelisierten Reaktionsdurchführung und Aufarbeitung können eine Reihe von im Handel erhältlichen Geräten verwendet werden, wie sie beispielsweise von den Firmen Stem Corporation, Woodrolfe road, Tollesbury, Essex, England, H+P Labortechnik GmbH, Bruckmannring 28, 85764 Oberschleißheim, Deutschland oder der Firma Radleys, Shirehill, Saffron Walden, Essex, CB 11 3AZ, England angeboten werden. Für die parallelisierte Aufreinigung von erfindungsgemäßen Verbindungen der allgemeinen Formel (I) beziehungsweise von bei der Herstellung anfallenden Zwischenprodukten stehen unter anderem Chromatographieapparaturen zur Verfügung, beispielsweise der Firma ISCO, Inc., 4700 Superior Street, Lincoln, NE 68504, USA.

Die aufgeführten Apparaturen führen zu einer modularen Vorgehensweise, bei der die einzelnen Arbeitsschritte automatisiert sind, zwischen den Arbeitsschritten jedoch manuelle Operationen durchgeführt werden müssen. Dies kann durch den Einsatz von teilweise oder vollständig integrierten Automationssystemen umgangen werden, bei denen die jeweiligen Automationsmodule beispielsweise durch Roboter bedient werden. Derartige Automationssysteme können zum Beispiel von der Firma Zymark Corporation, Zymark Center, Hopkinton, MA 01748, USA bezogen werden.

Neben den hier beschriebenen Methoden kann die Herstellung der erfindungsgemäßen Verbindungen der allgemeinen Formel (I) vollständig oder partiell durch festphasenunterstützte Methoden erfolgen. Zu diesem Zweck werden einzelne Zwischenstufen oder alle Zwischenstufen der Synthese oder einer für die entsprechende Vorgehensweise angepassten Synthese an ein Syntheseharz gebunden. Festphasenunterstützte Synthesemethoden sind in der Fachliteratur hinreichend beschrieben, z.B. Barry A. Bunin in "The Combinatorial Index", Verlag Academic Press, 1998.

Die Verwendung von festphasenunterstützten Synthesemethoden erlaubt eine Reihe von literaturbekannten Protokollen, die wiederum manuell oder automatisiert ausgeführt werden können. Zum Beispiel kann die "Teebeutelmethode" (Houghten, US 4,631,211; Houghten et al., Proc. Natl. Acad. Sci, 1985, 82, 5131-5135) mit Produkten der Firma IRORI, 11149 North Torrey Pines Road, La Jolla, CA 92037, USA teilweise automatisiert werden. Die Automatisierung von Festphasen unterstützten Parallelsynthesen gelingt beispielsweise durch Apparaturen der Firmen Argonaut Technologies, Inc., 887 Industrial Road, San Carlos, CA 94070, USA oder MultiSynTech GmbH, Wullener Feld 4, 58454 Witten, Deutschland.

Die Herstellung gemäß der hier beschriebenen Verfahren liefert die erfindungsgemäßen Salze, insbesondere Verbindungen der Formel (I), in Form von Substanzkollektionen, die Bibliotheken genannt werden. Gegenstand der vorliegenden Erfindung sind auch Bibliotheken, die mindestens zwei erfindungsgemäße Verbindungen, insbesondere Verbindungen der Formel (I) enthalten.

Die erfindungsgemäßen Verbindungen der Formel (I), weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfasst. Dabei ist es gleichgültig, ob die Substanzen im Vorsaat-, Vorauflauf- oder Nachauflaufverfahren ausgebracht werden.

Werden die erfindungsgemäßen Verbindungen der Formel (I)vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstopp ein, und die Unkrautpflanzen bleiben in dem zum Applikationszeitpunkt erreichten Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Obgleich die erfindungsgemäßen Verbindungen der Formel (I) eine ausgezeichnete herbizide Aktivität gegenüber mono- und dikotylen Unkräutern aufweisen, werden manche Kulturpflanzen wirtschaftlich bedeutender Kulturen, wie z.B. Leguminosen, nur unwesentlich oder gar nicht geschädigt.

Die vorliegenden erfindungsgemäßen Verbindungen der Formel (I) weisen eine ausgezeichnete Selektivität in Leguminosen auf, wobei überraschenderweise auch bei niedrigen Wirkstoffdosierungen eine hervorragende Wirkung gegen die in Leguminosen typisch auftretenden Schadpflanzen erhalten bleibt. Insbesondere werden in Kulturen von Leguminosen vorkommende, oft schwer bekämpfbare Schadpflanzen wie Spezies der Gattungen Amaranthus, Echinochloa, Sorghum, Ipomoea, Pharbitis, Solanum, Setaria, Brachiaria, Lolium, Euphorbia und Abutilon sehr wirksam bekämpft.

Die vorliegenden erfindungsgemäßen Verbindungen der Formel (I) eignen sich aus diesen Gründen sehr gut zur selektiven Bekämpfung von unerwünschtem Pflanzenwuchs in Leguminosen aber auch zur nicht-selektiven Bekämpfung von unerwünschtem Pflanzenwuchs, z.B. in Dauer- und Plantagenkulturen oder an Wegrändern, Plätzen, Industrieanlagen, Flugplätzen oder Eisenbahnanlagen oder bei der Burn-down-Anwendung.

Darüber hinaus weisen die erfindungsgemäßen Verbindungen der Formel (I), hervorragende wachstumsregulatorische Eigenschaften bei manchen Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Des Weiteren eignen sie sich auch zur generellen Steuerung und Hemmung von unerwünschtem vegetativem Wachstum. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen Verbindungen der Formel (I) auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmter Herbizide, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z.B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Gleichermaßen können die Wirkstoffe aufgrund ihrer herbiziden und pflanzenwachstumsregulatorischen Eigenschaften auch zur Bekämpfung von Schadpflanzen in Kulturen von bekannten oder noch zu entwickelnden durch Mutantenselektion erhaltenen Pflanzen eingesetzt werden.

Bevorzugt ist die Anwendung der erfindungsgemäßen Verbindungen der Formel (I), in wirtschaftlich bedeutenden transgenen oder durch Mutantenselektion erhaltenen Kulturen von Leguminosen, insbesondere Soja.

Vorzugsweise können die erfindungsgemäßen Verbindungen der Formel (I) als Herbizide in Nutzpflanzenkulturen eingesetzt werden, welche gegenüber den phytotoxischen Wirkungen der erfindungsgemäßen Verbindungen der Formel (I) resistent sind bzw. gentechnisch resistent gemacht worden sind, oder durch Mutantenselektion erhalten wurden. Ebenso bevorzugt können die erfindungsgemäßen Verbindungen der Formel (I) als Herbizide in Nutzpflanzenkulturen eingesetzt werden, die ein Kreuzungsprodukt aus gentechnisch resistent gemachten Pflanzen und durch Mutantenselektion erhaltenen Pflanzen darstellen, wie z.B. in WO 2007/024782 beschrieben.

Allgemein bekannte Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten.

Ebenso können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche gegen bestimmte Herbizide vom Typ Glufosinate (vgl. z. B. EP-A-0242236, EP-A-242246) oder Glyphosate (WO 92/00377) oder der Sulfonylharnstoffe (EP-A-0257993, US-A-5013659) resistent sind,
- transgene Kulturpflanzen, beispielsweise Baumwolle, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der oben genannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des oben genannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind. Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z.B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h., sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Vorzugsweise können die erfindungsgemäßen Verbindungen der Formel (I) in transgenen oder durch Mutantenselektion erhaltenen Kulturen oder Kreuzungen/Hybriden derselben eingesetzt werden, welche gegen Herbizide aus der Gruppe der Sulfonylharnstoffe, Glufosinate-ammonium oder Glyphosateisopropylammonium und analoge Wirkstoffe resistent sind.

Bei der Anwendung der erfindungsgemäßen Verbindungen der Formel (I) in transgenen oder durch Mutantenselektion erhaltenen Kulturen oder Kreuzungen derselben treten neben den in anderen Kulturen zu beobachtenden Wirkungen gegenüber Schadpflanzen oftmals Wirkungen auf, die für die Applikation in der jeweiligen transgenen oder durch Mutantenselektion erhaltenen Kulturen oder Kreuzungen derselben spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung der erfindungsgemäßen Verbindungen der Formel (I), als Herbizide zur Bekämpfung von Schadpflanzen in transgenen oder durch Mutantenselektion erhaltenen Kulturpflanzen oder Kreuzungen derselben.

Die erfindungsgemäßen Verbindungen können in Form von Spritzpulvern, emulgierbaren Konzentraten, versprühbaren Lösungen, Stäubemitteln oder Granulaten in den üblichen Zubereitungen angewendet werden. Gegenstand der Erfindung sind deshalb auch herbizide und pflanzenwachstumsregulierende Mittel, die die erfindungsgemäßen Verbindungen der Formel (I), enthalten.

Die erfindungsgemäßen Verbindungen der Formel (I), können auf verschiedene Arten formuliert werden, je nachdem welche biologischen und/oder chemischphysikalischen Parameter vorgegeben sind. Als Formulierungsmöglichkeiten kommen beispielsweise in Frage: Spritzpulver (WP), wasserlösliche Pulver (SP), wasserlösliche Konzentrate, emulgierbare Konzentrate (EC), Emulsionen (EW), wie ÖI-in-Wasser- und Wasser-in-ÖI-Emulsionen, versprühbare Lösungen, Suspensionskonzentrate (SC), Dispersionen auf ÖI- oder Wasserbasis, ölmischbare Lösungen, Kapselsuspensionen (CS), Stäubemittel (DP), Beizmittel, Granulate für die Streu- und Bodenapplikation, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln und Wachse. Diese einzelnen Formulierungstypen sind im Prinzip bekannt und werden beispielsweise beschrieben in: Winnacker-Küchler, "Chemische Technologie", Band 7, C. Hanser Verlag München, 4. Aufl. 1986, Wade van Valkenburg, "Pesticide Formulations", Marcel Dekker, N.Y., 1973; K. Martens, "Spray Drying" Handbook, 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hanser Verlag München, 4. Aufl. 1986.

Auf der Basis dieser Formulierungen lassen sich auch Kombinationen der erfindungsgemäßen Verbindungen der Formel (I) mit anderen pestizid wirksamen Stoffen, wie z.B. Insektiziden, Akariziden, Herbiziden, Fungiziden, sowie mit Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen wie Hammermühlen, Gebläsemühlen und Luftstrahlmühlen feingemahlen und gleichzeitig oder anschließend mit den Formulierungshilfsmitteln vermischt. Emulgierbare Konzentrate werden durch Auflösen des Wirkstoffes in einem organischen Lösungsmittel z.B. Butanol, Cyclohexanon, Dimethylformamid, Xylol oder auch höhersiedenden Aromaten oder Kohlenwasserstoffen oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calcium-Salze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitan-ester wie z.B. Sorbitanfettsäureester oder Polyoxethylensorbitanester wie z.B. Polyoxyethylensorbitanfettsäureester.

Stäubemittel erhält man durch Vermahlen des Wirkstoffes mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Nass-Vermahlung mittels handelsüblicher Perlmühlen und gegebenenfalls Zusatz von Tensiden, wie sie z.B. oben bei den anderen Formulierungstypen bereits aufgeführt sind, hergestellt werden.

Emulsionen, z.B. ÖI-in-Wasser-Emulsionen (EW), lassen sich beispielsweise mittels Rührern, Kolloidmühlen und/oder statischen Mischern unter Verwendung von wässrigen organischen Lösungsmitteln und gegebenenfalls Tensiden, wie sie z.B. oben bei den anderen Formulierungstypen bereits aufgeführt sind, herstellen. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischern und Extrusion ohne festes Inertmaterial hergestellt. Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57. Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103. Die agrochemischen Zubereitungen enthalten in der Regel 0,1 bis 99 Gew.-%, vorzugsweise 0,1 bis 95 Gew.-%, insbesondere bevorzugt 0.5 bis 90 Gew.-% Wirkstoff der erfindungsgemäßen Verbindungen der Formel (I).

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 1 bis 90, vorzugsweise 5 bis 80 Gew.-% betragen. Staubförmige Formulierungen enthalten 1 bis 30 Gew.-% Wirkstoff, vorzugsweise meistens 5 bis 20 Gew.-% an Wirkstoff, versprühbare Lösungen enthalten etwa 0,05 bis 80, vorzugsweise 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-%, vorzugsweise zwischen 10 und 80 Gew.-%.

Daneben enthalten die genannten Wirkstoffformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängeln; als Emulgier-und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide.

Die herbizide Wirkung der erfindungsgemäßen Verbindungen der Formel (I), kann z.B. auch durch oberflächenaktive Substanzen verbessert werden, vorzugsweise durch Netzmittel aus der Reihe der Fettalkohol-Polyglykolether. Die Fettalkohol-Polyglykolether enthalten vorzugsweise 10 - 18 C-Atome im Fettalkoholrest und 2 - 20 Ethylenoxideinheiten im Polyglykoletherteil. Die Fettalkohol-Polyglykolether können nichtionisch vorliegen, oder ionisch, z.B. in Form von Fettalkohol-Polyglykolethersulfaten, vorliegen, die z.B. als Alkalisalze (z.B. Natrium- und Kaliumsalze) oder Ammoniumsalze, oder auch als Erdalkalisalze wie Magnesiumsalze verwendet werden, wie C₁₂/C₁₄-Fettalkohol-diglykolethersulfat-Natrium (Genapol^{®} LRO, Clariant GmbH); siehe z.B. EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Nichtionische Fettalkohol-Polyglykolether sind beispielsweise 2 - 20, vorzugsweise 3 - 15, Ethylenoxideinheiten enthaltende (C₁₀- C₁₈)-, vorzugsweise (C₁₀-C₁₄)-Fettalkohol-Polyglykolether (z.B. Isotridecylalkohol-Polyglykolether) z.B. aus der Genapol^{®} X-Reihe wie Genapol^{®} X-030, Genapol^{®} X-060, Genapol^{®} X-080 oder Genapol^{®} X-150 (alle von Clariant GmbH).

Die vorliegende Erfindung umfasst ferner die Kombination der erfindungsgemäßen Verbindungen der Formel (I), mit den vorgängig genannten Netzmitteln aus der Reihe der Fettalkohol-Polyglykolether, die vorzugsweise 10 - 18 C-Atome im Fettalkoholrest und 2 - 20 Ethylenoxideinheiten im Polyglykoletherteil enthalten und nichtionisch oder ionisch (z.B. als Fettalkohol-polyglykolethersulfate) vorliegen können. Bevorzugt sind C₁₂/C₁₄-Fettalkohol-diglykolethersulfat-Natrium (Genapol^{®} LRO, Clariant GmbH) und Isotridecylalkohol-Polyglykolether, mit 3 - 15 Ethylenoxideneinheiten, z.B. aus der Genapol^{®} X-Reihe wie Genapol^{®} X-030, Genapol^{®} X-060, Genapol^{®} X-080 und Genapol^{®} X-150 (alle von Clariant GmbH). Weiterhin ist bekannt, daß Fettalkohol-Polyglykolether wie nichtionische oder ionische Fettalkohol-polyglykolether (z.B. Fettalkohol-Polyglykolethersulfate) auch als Penetrationshilfsmittel und Wirkungsverstärker für eine Reihe anderer Herbizide, unter anderem auch für Herbizide aus der Reihe der Imidazolinone geeignet sind (siehe z.B. EP-A-0502014).

Weiterhin ist bekannt, dass Fettalkohol-Polyglykolether wie nichtionische oder ionische Fettalkohol-Polyglykolether (z.B. Fettalkohol-Polyglykolethersulfate) auch als Penetrationshilfsmittel und Wirkungsverstärker für eine Reihe anderer Herbizide, unter anderem auch für Herbizide aus der Reihe der Imidazolinone geeignet sind (siehe z.B. EP-A-0502014).

Die herbizide Wirkung der erfindungsgemäßen Herbizid-Kombinationen kann auch durch die Verwendung von Pflanzenölen verstärkt werden. Unter dem Begriff Pflanzenöle werden Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für C₁₀-C₂₂-Fettsäure-Ester sind Ester, die durch Umsetzung von Glycerin oder Glykol mit den C₁₀-C₂₂-Fettsäuren erhalten werden, wie sie z.B. in Ölen aus ölliefernden Pflanzenarten enthalten sind, oder C₁-C₂₀-Alkyl-C₁₀C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-C₁₀-C₂₂-Fettsäure-Ester bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Die Pflanzenöle können in den erfindungsgemäßen herbiziden Mitteln z.B. in Form kommerziell erhältlicher ölhaltiger Formulierungszusatzstoffe, insbesondere solcher auf Basis von Rapsöl wie Hasten^{®} (Victorian Chemical Company, Australien, nachfolgend Hasten genannt, Hauptbestandteil: Rapsölethylester), Actirob^{®}B (Novance, Frankreich, nachfolgend ActirobB genannt, Hauptbestandteil: Rapsölmethylester), Rako-Binol^{®} (Bayer AG, Deutschland, nachfolgend Rako-Binol genannt, Hauptbestandteil: Rapsöl), Renol^{®} (Stefes, Deutschland, nachfolgend Renol genannt, Pflanzenölbestandteil: Rapsölmethylester) oder Stefes Mero^{®} (Stefes, Deutschland, nachfolgend Mero genannt, Hauptbestandteil: Rapsölmethylester) enthalten sein.

Die vorliegende Erfindung umfasst in einer weiteren Ausführungsform Kombinationen mit den vorgängig genannten Pflanzenölen wie Rapsöl, bevorzugt in Form kommerziell erhältlicher ölhaltiger Formulierungszusatzstoffe, insbesondere solcher auf Basis von Rapsöl wie Hasten^{®} (Victorian Chemical Company, Australien, nachfolgend Hasten genannt, Hauptbestandteil: Rapsölethylester), Actirob^{®}B (Novance, Frankreich, nachfolgend ActirobB genannt, Hauptbestandteil: Rapsölmethylester), Rako-Binol^{®} (Bayer AG, Deutschland, nachfolgend Rako-Binol genannt, Hauptbestandteil: Rapsöl), Renol^{®} (Stefes, Deutschland, nachfolgend Renol genannt, Pflanzenölbestandteil: Rapsölmethylester) oder Stefes Mero^{®} (Stefes, Deutschland, nachfolgend Mero genannt, Hauptbestandteil: Rapsölmethylester).

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die erfindungsgemäßen Verbindungen der Formel (I), können als solche oder in Form ihrer Zubereitungen (Formulierungen) mit anderen pestizid wirksamen Stoffen, wie z. B. Insektiziden, Akariziden, Nematiziden, Herbiziden, Fungiziden, Safenern, Düngemitteln und/oder Wachstumsregulatoren kombiniert eingesetzt werden, z.B. als Fertigformulierung oder als Tankmischungen.

Als Kombinationspartner für die erfindungsgemäßen Verbindungen der Formel (I) in Mischungsformulierungen oder im Tank-Mix sind beispielsweise bekannte, vorzugsweise herbizide Wirkstoffe, die auf einer Inhibition von beispielsweise Acetolactat-Synthase, Acetyl-Coenzym-A-Carboxylase, PS I, PS II, HPPDO, Phytoene-Desaturase, Protoporphyrinogen-Oxidase, Glutamine-Synthetase, Cellulosebiosynthese, 5-Enolpyruvylshikimat-3-phosphat-Synthetase beruhen, einsetzbar. Solche Verbindungen und auch andere einsetzbare Verbindungen mit teilweise unbekanntem oder anderem Wirkungsmechanismus sind z.B. in Weed Research 26, 441-445 (1986), oder in dem Handbuch "The Pesticide Manual", 12. Auflage 2000, oder 13. Auflage 2003 oder 14. Auflage 2006/2007, oder in dem entsprechenden "e-Pesticide Manual", Version 4 (2006), jeweils herausgegeben vom British Crop Protection Council, (im Folgenden auch kurz "PM"), und dort zitierter Literatur beschrieben. Listen von "Common names" sind auch in "The Compendium of Pesticide Common Names" im Internet verfügbar. Als literaturbekannte Herbizide, die mit den Verbindungen der Formel (I) kombiniert werden können, sind z.B. die Wirkstoffe aus der nachfolgenden Tabelle 1 zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet): acetochlor; acibenzolar-S-methyl; acifluorfen(-sodium); aclonifen; AD-67; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim(-sodium); ametryn; amicarbazone, amidochlor, amidosulfuron; aminocyclopyrachlor (CAS 858956-08-8); aminopyralid; amitrol; ammonium pelargonate; AMS, d.h. ammonium sulfamat; ancimidol; anilofos; asulam; atrazine; aviglycine; azafenidin, azimsulfuron (DPX-A8947); aziprotryn; barban; BAS 516 H, d.h. 5-Fluor-2-phenyl-4H-3,1-benzoxazin-4-on; beflubutamid (UBH-509), benazolin(-ethyl); bencarbazone; benfluralin; benfuresate; bensulfuron(-methyl); bensulide; bentazone; benzfendizone; benzobicyclon, benzofenap; benzofluor; benzoylprop(-ethyl); benzthiazuron; bilanaphos; bifenox; bispyribac(-sodium) (KIH-2023); borax; bromacil; bromobutide; bromofenoxim; bromoxynil; bromuron; buminafos; busoxinone; butachlor; butafenacil; butamifos; butenachlor (KH-218); buthidazole; butralin; butroxydim; butylate; cafenstrole (CH-900); caloxydim; carbetamide; carfentrazone(-ethyl); catechin; CDAA, d.h. 2-Chlor-N,N-di-2-propenylacetamid; CDEC, d.h. Diethyldithiocarbaminsäure-2-chlorallylester; chlormesulon; chlomethoxyfen; chloramben; chlorazifop-butyl; chlorbromuron; chlorbufam; chlorfenac; chlorfenprop; chlorflurecol(-methyl); chlorflurenol(-methyl); chloridazon; chlorimuron(-ethyl); chlormequat(-chloride); chlornitrofen; chlorophthalim (MK-616); chlorotoluron; chloroxuron; chlorpropham; chlorsulfuron; chlorthal-dimethyl; chlorthiamid; chlortoluron; cinidon(-methyl und -ethyl); cinmethylin; cinosulfuron; clefoxydim; clethodim; clodinafop und dessen Esterderivate (z.B. clodinafop-propargyl); clofencet; clomazone; clomeprop; cloprop; cloproxydim; clopyralid; clopyrasulfuron(-methyl); cloransulam(-methyl); cumyluron (JC 940); cyanamide; cyanazine; cycloate; cyclosulfamuron (AC 104); cycloxydim; cycluron; cyhalofop und dessen Esterderivate (z.B. Butylester, DEH-112); cyperquat; cyprazine; cyprazole; daimuron; 2,4-D; 2,4-DB; dalapon; daminozide; dazomet; n-decanol; desmedipham; desmetryn; di-allate; dicamba; dichlobenil; dichlormid; dichlorprop(-P)-salze; diclofop und dessen Ester wie diclofop-methyl; diclofop-P(-methyl); diclosulam; diethatyl(-ethyl); difenoxuron; difenzoquat(-methylsulfate); diflufenican; diflufenzopyr(-sodium); dimefuron; dimepiperate; dimethachlor; dimethametryn; dimethazone; dimethenamid (SAN-582H); dimethenamide-P; dimethylarsinic acid; dimethipin; dimetrasulfuron; dimexyflam; dinitramine; dinoseb; dinoterb; diphenamid; dipropetryn; diquat-salze; dithiopyr; diuron; DNOC; eglinazineethyl; EL 77, d.h. 5-Cyano-1-(1,1-dimethylethyl)-N-methyl-1H-pyrazole-4-carboxamid; endothal; epoprodan; EPTC; esprocarb; ethalfluralin; ethametsulfuron-methyl; ethephon; ethidimuron; ethiozin; ethofumesate; ethoxyfen und dessen Ester (z.B. Ethylester, HN-252); ethoxysulfuron; etobenzanid (HW 52); F5231, d.h. N-[2-Chlor-4-fluor-5-[4-(3-fluorpropyl)-4,5-dihydro-5-oxo-1H-tetrazol-1-yl]-phenyl]-ethansulfonamid; fenchlorazole(-ethyl); fenclorim; fenoprop; fenoxan, fenoxaprop und fenoxaprop-P sowie deren Ester, z.B. fenoxaprop-P-ethyl und fenoxaprop-ethyl; fenoxydim; fentrazamide; fenuron; ferrous sulfate; flamprop(-methyl oder -isopropyl oder -isopropyl-L); flamprop-M(-methyl oder - isopropyl); flazasulfuron; floazulate (JV-485); florasulam; fluazifop und fluazifop-P und deren Ester, z.B. fluazifop-butyl und fluazifop-P-butyl; fluazolate; flucarbazone(-sodium); flucetosulfuron; fluchloralin; flufenacet; flufenpyr(-ethyl); flumetralin; flumetsulam; flumeturon; flumiclorac(-pentyl); flumioxazin (S-482); flumipropyn; fluometuron; fluorochloridone; fluorodifen; fluoroglycofen(-ethyl); flupoxam (KNW-739); flupropacil (UBIC-4243); flupropanoate; flupyrsulfuron(-methyl)(-sodium); flurenol(-butyl); fluridone; flurochloridone; fluroxypyr(-meptyl); flurprimidol; flurtamone; fluthiacet(-methyl) (KIH-9201); fluthiamide; fluxofenim; fomesafen; foramsulfuron; forchlorfenuron; fosamine; furyloxyfen; gibberillic acid; glufosinate(-ammonium); glyphosate(-isopropylammonium); halosafen; halosulfuron(-methyl); haloxyfop und dessen Ester; haloxyfop-P (= R-haloxyfop) und dessen Ester; HC-252; hexazinone; HNPC-C9908, d.h. 2-[[[[[4-Methoxy-6-(methylthio)-2-pyrimidinyl]amino]carbonyl]amino]sulfonyl]-benzoesäuremethylester; imazamethabenz(-methyl); imazamox; imazapic; imazapyr; imazaquin und Salze wie das Ammoniumsalz; imazethapyr; imazosulfuron; inabenfide; indanofan; iodosulfuron-methyl(-sodium); ioxynil; isocarbamid; isopropalin; isoproturon; isouron; isoxaben; isoxachlortole; isoxaflutole; isoxapyrifop; karbutilate; lactofen; lenacil; linuron; Maleinsäurehydrazid (MH); MBTA; MCPA; MCPB; mecoprop(-P); mefenacet; mefluidide; mepiquat(-chloride); mesosulfuron(-methyl); mesotrione; metam; metamifop; metamitron; metazachlor; methabenzthiazuron; metham; methazole; methoxyphenone; methylarsonic acid; methyl-cyclopropene; methyldymron; methylisothiocyanate; methabenzthiazuron; metobenzuron; metobromuron; (alpha-)metolachlor; metosulam (XRD 511); metoxuron; metribuzin; metsulfuron-methyl; molinate; monalide; monocarbamide dihydrogensulfate; monolinuron; monuron; monosulfuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; naproanilide; napropamide; naptalam; NC 310, d.h. 4-(2,4-dichlorbenzoyl)-1-methyl-5-benzyloxypyrazol; neburon; nicosulfuron; nipyraclofen; nitralin; nitrofen; nitrophenolate mixture; nitrofluorfen; nonanoic acid; norflurazon; orbencarb; orthosulfamuron; oxabetrinil; oryzalin; oxadiargyl (RP-020630); oxadiazon; oxasulfuron; oxaziclomefone; oxyfluorfen; paclobutrazol; paraquat(-dichloride); pebulate; pelargonic acid; pendimethalin; penoxulam; pentachlorophenol; pentanochlor; pentoxazone; perfluidone; pethoxamid; phenisopham; phenmedipham; picloram; picolinafen; pinoxaden; piperophos; piributicarb; pirifenop-butyl; pretilachlor; primisulfuron(-methyl); probenazole; procarbazone-(sodium); procyazine; prodiamine; profluralin; profoxydim; prohexadione(-calcium); prohydrojasmon; proglinazine(-ethyl); prometon; prometryn; propachlor; propanil; propaquizafop und dessen Ester; propazine; propham; propisochlor; propoxycarbazone(-sodium) (MKH-6561); propyzamide; prosulfalin; prosulfocarb; prosulfuron (CGA-152005); prynachlor; pyraclonil; pyraflufen(-ethyl) (ET-751); pyrasulfotole; pyrazolynate; pyrazon; pyrazosulfuron(-ethyl); pyrazoxyfen; pyribambenz-isopropyl (ZJ 0702); pyrimbambenz-propyl (ZJ 0273); pyribenzoxim; pyributicarb; pyridafol; pyridate; pyriftalid; pyriminobac(-methyl) (KIH-6127); pyrimisulfan (KIH-5996); pyrithiobac(-sodium) (KIH-2031); pyroxasulfone (KIH-485); pyroxofop und dessen Ester (z.B. Propargylester); pyroxsulam; quinclorac; quinmerac; quinoclamine; quinofop und dessen Esterderivate, quizalofop und quizalofop-P und deren Esterderivate z.B. quizalofop-ethyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; sintofen; SN 106279, d.h. 2-[[7-[2-Chlor-4-(trifluormethyl)-phenoxy]-2-naphthalenyl]-oxy]-propansäure und -methylester; sulcotrione; sulfentrazone (FMC-97285, F-6285); sulfazuron; sulfometuron(-methyl); sulfosate (ICI-A0224); sulfosulfuron; sulfufenacic (CAS 372137-35-4); TCA(-sodium); tebutam (GCP-5544); tebuthiuron; tecnacene; tefuryltrione; tembotrione; tepraloxydim; terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiafluamide, thiazafluron; thiazopyr (Mon-13200); thidiazimin (SN-24085); thidiazuron; thiencarbazone(-methyl); thifensulfuron(-methyl); thiobencarb; Ti 35; tiocarbazil; topramezone; tralkoxydim; tri-allate; triasulfuron; triaziflam; triazofenamide; tribenuron(-methyl); triclopyr; tridiphane; trietazine; trifloxysulfuron(-sodium); trifluralin; triflusulfuron und Ester (z.B. Methylester, DPX-66037); trimeturon; trinexapac; tritosulfuron; tsitodef; uniconazole; vernolate; WL 110547, d.h. 5-Phenoxy-1-[3-(trifluormethyl)-phenyl]-1H-tetrazol; D-489; ET-751; KIH-218; KIH-485; KIH-509; KPP-300; LS 82-556; NC-324; NC-330; DPX-N8189; SC-0774; DOWCO-535; DK-8910; V-53482; PP-600; MBH-001; TH-547; SYN-523; IDH-100; SYP-249; HOK-201; IR-6396; MTB-951; NC-620.

Als Kombinationspartner für die Verwendung in Sojakulturen kommen vorzugsweise Verbindungen in Frage, die selektiv in Soja sind, beispielsweise:
(a) selektiv in Soja gegen monokotyle und dikotyle Schadpflanzen wirksame Herbizide, beispielsweise Trifluralin, Metribuzin, Clomazone, Pendimethalin, Metolachlor, Flumetsulam, Dimethenamid, Linuron, Ethalfluralin, Flufenacet, Norflurazon, Vernolate, Chlortoluron, Chlorotoluron, Cloransulam und Ester wie der Methylester, Imazethapyr, Imazamox, Imazaquin; oder
(b) selektiv in Soja gegen dikotyle Schadpflanzen wirksame Herbizide, beispielsweise Sulfentrazone, Bentazone, Thifensulfuron und dessen Ester, insbesondere der Methylester, Oxyfluorfen, Lactofen, Fomesafen, Flumiclorac und dessen Ester wie der Pentylester, Acifluorfen und dessen Natriumsalz, 2,4-DB und dessen Ester und Salze, Flumioxazin, Benazolin, 2,4-D und dessen Ester und Salze Chlorimuron und dessen Ester und Salze wie Chlorimuron-ethyl; oder
(c) selektiv in Soja gegen monokotyle Schadpflanzen wirksame Herbizide, beispielsweise Sethoxydim, Cycloxydim, Clethodim, Quizalofop-P und dessen Ester wie der Ethyl- oder Tefurylester, Fenoxaprop-P und dessen Ester wie der Ethylester, Fluazifop-P und dessen Ester wie der Butylester, Haloxyfop und Haloxyfop-P und deren Ester wie der Methyl- oder der - etotylester, Propaquizafop, Alachlor; oder
(d) nicht selektive, z.B. auch zu spezifischen Zwecken in Soja einsetzbare Herbizide, z. B. Glufosinate, Glyphosate, Paraquat (Salze) wie Paraquatdichlorid,

Ebenfalls bevorzugte Kombinationspartner sind Benozalin, Fenoxaprop, Lactofen, Chlortoluron, Flufenacet, Metribuzin, Benfuresate, Fentrazamid, Mefenacet, Diclofop, loxynil, Bromoxynil, Amidosulfuron, Flurtamone, Diflufenican, Ethoxysulfuron, Flucarbazone, Propoxycarbazone, Sulcotrione, Mesotrione, Isoproturon, lodosulfuron, Mesosulfuron, Foramsulfuron, Anilofos, Oxaziclomefone, Oxadiargyl, Isoxaflutole, Linuron.

In Fällen, in denen die Anwendung im Bereich der nicht-selektiven Bekämpfung von Unkräutern betrieben werden soll, eignen sich als Mischungspartner weitere nicht-selektive Herbizide, bevorzugt Glufosinate und Glyphosate, oder deren jeweilige Salze.

Von besonderem Interesse ist die selektive Bekämpfung von Schadpflanzen in Leguminosen. Obgleich die erfindungsgemäßen Verbindungen der Formel (I) in Leguminosen sehr gute bis ausreichende Selektivität aufweisen, können prinzipiell und vor allem auch im Falle von Mischungen mit anderen Herbiziden, die weniger selektiv sind, Phytotoxizitäten auftreten. Diesbezüglich sind Kombinationen erfindungsgemäßer Salze, insbesondere von Verbindungen der Formel (I) von besonderem Interesse, welche die erfindungsgemäßen Verbindungen der Formel (I) bzw. deren Kombinationen mit anderen Herbiziden oder Pestiziden und Safenern enthalten. Die Safener, welche in einem antidotisch wirksamen Gehalt eingesetzt werden, reduzieren die phytotoxischen Nebenwirkungen der eingesetzten Herbizide/Pestizide.

Die Safener sind vorzugsweise ausgewählt aus der Gruppe bestehend aus:
A) Verbindungen der Formel (S-I), 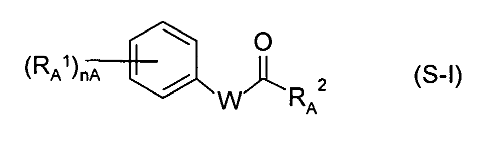 wobei die Symbole und Indizes folgende Bedeutungen haben:
   n_{A} ist eine natürliche Zahl von 0 bis 5, vorzugsweise 0 bis 3;
   R_{A}¹ ist Halogen, (C₁-C₄)-Alkyl, (C₁-C₄)-Alkoxy, Nitro oder (C₁-C₄)-Haloalkyl; 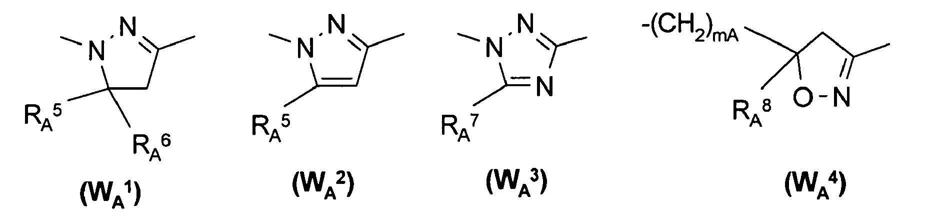
   W_{A} ist ein unsubstituierter oder substituierter divalenter heterocyclischer Rest aus der Gruppe der teilungesättigten oder aromatischen Fünfring-Heterocyclen mit 1 bis 3 Heteroringatomen des Typs N oder O, wobei mindestens ein N-Atom und höchstens ein O-Atom im Ring enthalten ist, vorzugsweise ein Rest aus der Gruppe (W_{A}¹) bis (W_{A}⁴),
   m_{A} ist 0 oder 1;
   R_{A}² ist OR_{A}³, SR_{A}³ oder NR_{A}³R_{A}⁴ oder ein gesättigter
      oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (S-I) verbunden ist und unsubstituiert oder durch Reste aus der Gruppe (C₁-C₄)-Alkyl, (C₁-C₄)-Alkoxy oder gegebenenfalls substituiertes Phenyl substituiert ist, vorzugsweise ein Rest der Formel OR_{A}³, NHR_{A}⁴ oder N(CH₃)₂, insbesondere der Formel OR_{A}³;
   R_{A}³ ist Wasserstoff oder ein unsubstituierter oder substituierter aliphatischer Kohlenwasserstoffrest, vorzugsweise mit insgesamt 1 bis 18 C-Atomen;
   R_{A}⁴ ist Wasserstoff, (C₁-C₆)-Alkyl, (C₁-C₆)-Alkoxy oder substituiertes oder unsubstituiertes Phenyl;
   R_{A}⁵ ist H, (C₁-C₈)-Alkyl, (C₁-C₈)-Haloalkyl, (C₁-C₄)-Alkoxy-(C₁-C₈)-alkyl, Cyano oder COOR_{A}⁹, worin R_{A}⁹ Wasserstoff, (C₁-C₈)-Alkyl, (C₁-C₈)-Haloalkyl, (C₁-C₄)-Alkoxy-(C₁-C₄)-alkyl, (C₁-C₆)-Hydroxyalkyl, (C₃-C₁₂)-Cycloalkyl oder Tri-(C₁-C₄)-alkyl-silyl ist;
   R_{A}⁶, R_{A}⁷, R_{A}⁸ sind gleich oder verschieden Wasserstoff, (C₁-C₈)-Alkyl, (C₁-C₈)-Haloalkyl, (C₃-C₁₂)-Cycloalkyl oder substituiertes oder unsubstituiertes Phenyl;
      vorzugsweise:
      a) Verbindungen vom Typ der Dichlorphenylpyrazolin-3-carbonsäure, vorzugsweise Verbindungen wie
         1-(2,4-Dichlorphenyl)-5-(ethoxycarbonyl)-5-methyl-2-pyrazolin-3-carbonsäure-ethylester (S1-1) ("Mefenpyr-diethyl", siehe Pestic. Man.), und verwandte Verbindungen, wie sie in der WO 91/07874 beschrieben sind;
      b) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind;
      c) Verbindungen vom Typ der Triazolcarbonsäuren, vorzugsweise Verbindungen wie Fenchlorazol(-ethylester), d.h. 1-(2,4-Dichlorphenyl)-5-trichlormethyl-(1H)-1,2,4-triazol-3-carbonsäureethylester (S1-6), und verwandte Verbindungen wie sie in EP-A-174 562 und EP-A-346 620 beschrieben sind;
      d) Verbindungen vom Typ der 5-Benzyl- oder 5-Phenyl-2-isoxazolin-3- carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäureethylester (S1-9) ("Isoxadifen-ethyl") oder -n-propylester (S1-10) oder der 5-(4-Fluorphenyl)-5-phenyl-2-isoxazolin-3-carbonsäureethylester (S1-11), wie sie in der Patentanmeldung WO-A-95/07897 beschrieben sind.
B) Chinolinderivate der Formel (S-II), 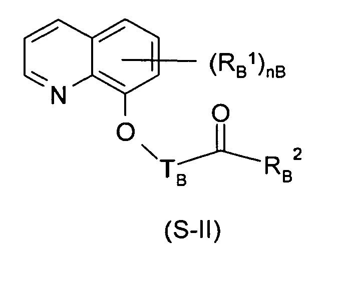 wobei die Symbole und Indizes folgende Bedeutungen haben:
   R_{B}¹ Halogen, (C₁-C₄)-Alkyl, (C₁-C₄)-Alkoxy, Nitro oder (C₁-C₄)-Haloalkyl;
   n_{B} ist eine natürliche Zahl von 0 bis 5, vorzugsweise 0 bis 3;
   R_{B}² OR_{B}³, SR_{B}³ oder NR_{B}³R_{B}⁴ oder ein gesättigter
      oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (S-II) verbunden ist und unsubstituiert oder durch Reste aus der Gruppe (C₁-C₄)-Alkyl, (C₁-C₄)-Alkoxy oder gegebenenfalls substituiertes Phenyl substituiert ist, vorzugsweise ein Rest der Formel OR_{B}³, NHR_{B}⁴ oder N(CH₃)₂, insbesondere der Formel OR_{B}³;
   R_{B}³ ist Wasserstoff oder ein unsubstituierter oder substituierter aliphatischer Kohlenwasserstoffrest, vorzugsweise mit insgesamt 1 bis 18 C-Atomen;
   R_{B}⁴ ist Wasserstoff, (C₁-C₆)-Alkyl, (C₁-C₆)-Alkoxy oder substituiertes oder unsubstituiertes Phenyl;
   T_{B} ist eine (C₁ oder C₂)-Alkandiylkette, die unsubstituiert oder mit einem oder zwei (C₁-C₄)-Alkylresten oder mit [(C₁-C₃)-Alkoxy]-carbonyl substituiert ist;
      vorzugsweise:
      a) Verbindungen vom Typ der 8-Chinolinoxyessigsäure (S2), vorzugsweise (5-Chlor-8-chinolinoxy)essigsäure-(1-methylhexyl)-ester (Common name "Cloquintocet-mexyl" (S2-1) (siehe Pestic. Man.), (5-Chlor-8-chinolinoxy)essigsäure-(1,3-dimethyl-but-1-yl)-ester (S2-2), (5-Chlor-8-chinolinoxy)essigsäure-4-allyl-oxy-butylester (S2-3), (5-Chlor-8-chinolinoxy)essigsäure-1-allyloxy-prop-2-ylester (S2-4), (5-Chlor-8-chinolinoxy)essigsäureethylester (S2-5), (5-Chlor-8-chinolinoxy)essigsäuremethylester (S2-6), (5-Chlor-8-chinolinoxy)essigsäureallylester (S2-7), (5-Chlor-8-chinolinoxy)essigsäure-2-(2-propyliden-iminoxy)-1-ethylester (S2-8), (5-Chlor-8-chinolinoxy)essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind, sowie deren Hydrate und Salze wie sie in der WO-A-2002/034048 beschrieben sind.
      b) Verbindungen vom Typ der (5-Chlor-8-chinolinoxy)malonsäure, vorzugsweise Verbindungen wie (5-Chlor-8-chinolinoxy)malonsäurediethylester, (5-Chlor-8-chinolinoxy)malonsäurediallylester, (5-Chlor-8-chinolinoxy)malonsäure-methyl-ethylester und verwandte Verbindungen, wie sie in EP-A-0 582 198 beschrieben sind.
C) Verbindungen der Formel (S-III) 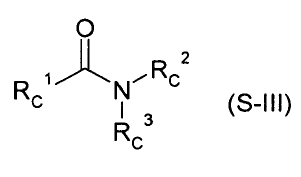 wobei die Symbole und Indizes folgende Bedeutungen haben:
   R_{C}¹ ist (C₁-C₄)-Alkyl, (C₁-C₄)-Haloalkyl, (C₂-C₄)-Alkenyl, (C₂-C₄)-Haloalkenyl, (C₃-C₇)-Cycloalkyl, vorzugsweise Dichlormethyl;
   R_{C}², R_{C}³ ist gleich oder verschieden Wasserstoff, (C₁-C₄)-Alkyl, (C₂-C₄)-Alkenyl, (C₂-C₄)-Alkinyl, (C₁-C₄)-Haloalkyl, (C₂-C₄)-Haloalkenyl, (C₁-C₄)-Alkylcarbamoyl-(C₁-C₄)-alkyl, (C₂-C₄)-Alkenylcarbamoyl-(C₁-C₄)-alkyl, (C₁-C₄)-Alkoxy-(C₁-C₄)-alkyl, Dioxolanyl-(C₁-C₄)-alkyl, Thiazolyl, Furyl, Furylalkyl, Thienyl, Piperidyl, substituiertes oder unsubstituiertes Phenyl, oder R_{C}² und R_{C}³ bilden zusammen einen substituierten oder unsubstituierten heterocyclischen Ring,
   vorzugsweise einen Oxazolidin-, Thiazolidin-, Piperidin-, Morpholin-, Hexahydropyrimidin- oder Benzoxazinring;
   vorzugsweise:
   Wirkstoffe vom Typ der Dichloracetamide, die häufig als Vorauflaufsafener (bodenwirksame Safener) angewendet werden, wie z. B.
   "Dichlormid" (siehe Pestic.Man.) (= N,N-Diallyl-2,2-dichloracetamid),
   "R-29148" (= 3-Dichloracetyl-2,2,5-trimethyl-1 ,3-oxazolidin von der Firma Stauffer), "R-28725" (= 3-Dichloracetyl-2,2,-dimethyl-1 ,3-oxazolidin von der Firma Stauffer), "Benoxacor" (siehe Pestic. Man.) (= 4-Dichloracetyl-3,4-dihydro-3-methyl-2H-1,4-benzoxazin),
   "PPG-1292" (= N-Allyl-N-[(1,3-dioxolan-2-yl)-methyl]-dichloracetamid von der Firma PPG Industries),
   "DKA-24" (= N-Allyl-N-[(allylaminocarbonyl)-methyl]-dichloracetamid von der Firma Sagro-Chem),
   "AD-67" oder "MON 4660" (= 3-Dichloracetyl-1-oxa-3-aza-spiro[4,5]decan von der Firma Nitrokemia bzw. Monsanto),
   "TI-35" (= 1-Dichloracetyl-azepan von der Firma TRI-Chemical RT)
   "Diclonon" (Dicyclonon) oder "BAS145138" oder "LAB145138" (= 3-Dichloracetyl-2,5,5-trimethyl-1,3-diazabicyclo[4.3.0]nonan von der Firma BASF) und "Furilazol" oder "MON 13900" (siehe Pestic. Man.) (= (RS)-3-Dichloracetyl-5-(2-furyl)-2,2-dimethyloxazolidin)
D) N-Acylsulfonamide der Formel (S-IV) und ihre Salze, 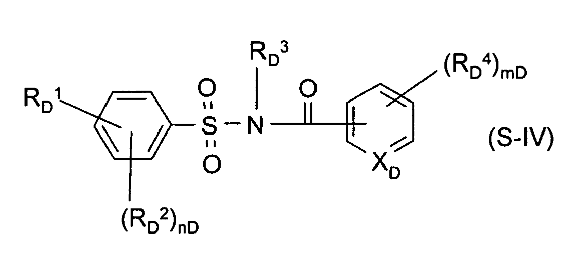 worin
   X_{D} ist CH oder N;
   R_{D}¹ ist CO-NR_{D}⁵R_{D}⁶ oder NHCO-R_{D}⁷;
   R_{D}² ist Halogen, (C₁-C₄)-Haloalkyl, (C₁-C₄)-Haloalkoxy, Nitro, (C₁-C₄)-Alkyl, (C₁-C₄)-Alkoxy, (C₁-C₄)-Alkylsulfonyl, (C₁-C₄)-Alkoxycarbonyl oder (C₁-C₄)-Alkylcarbonyl;
   R_{D}³ ist Wasserstoff, (C₁-C₄)-Alkyl, (C₂-C₄)-Alkenyl oder (C₂-C₄)-Alkinyl;
   R_{D}⁴ ist Halogen, Nitro, (C₁-C₄)-Alkyl, (C₁-C₄)-Haloalkyl, (C₁-C₄)-Haloalkoxy, (C₃-C₆)-Cycloalkyl, Phenyl, (C₁-C₄)-Alkoxy, Cyano, (C₁-C₄)-Alkylthio, (C₁-C₄)-Alkyl-sulfinyl, (C₁-C₄)-Alkylsulfonyl, (C₁-C₄)-Alkoxycarbonyl oder (C₁-C₄)-Alkylcarbonyl;
   R_{D}⁵ ist Wasserstoff, (C₁-C₆)-Alkyl, (C₃-C₆)-Cycloalkyl, (C₂-C₆)-Alkenyl, (C₂-C₆)-Alkinyl, (C₅-C₆)-Cycloalkenyl, Phenyl oder 3- bis 6-gliedriges Heterocyclyl enthaltend v_{D} Heteroatome aus der Gruppe Stickstoff, Sauerstoff und Schwefel, wobei die sieben letztgenannten Reste durch v_{D} Substituenten aus der Gruppe Halogen, (C₁-C₆)-Alkoxy, (C₁-C₆)-Haloalkoxy, (C₁-C₂)-Alkylsulfinyl, (C₁-C₂)-Alkylsulfonyl, (C₃-C₆)-Cycloalkyl, (C₁-C₄)-Alkoxycarbonyl, (C₁-C₄)-Alkylcarbonyl und Phenyl und im Falle cyclischer Reste auch (C₁-C₄)-Alkyl und (C₁-C₄)-Haloalkyl substituiert sind;
   R_{D}⁶ ist Wasserstoff, (C₁-C₆)-Alkyl, (C₂-C₆)-Alkenyl oder (C₂-C₆)-Alkinyl, wobei die drei letztgenannten Reste durch v_{D} Reste aus der Gruppe Halogen, Hydroxy, (C₁-C₄)-Alkyl, (C₁-C₄)-Alkoxy und (C₁-C₄)-Alkylthio substituiert sind, oder
   R_{D}⁵ und R_{D}⁶ bilden gemeinsam mit dem dem sie tragenden Stickstoffatom einen Pyrrolidinyl- oder Piperidinyl-Rest;
   R_{D}⁷ ist Wasserstoff, (C₁-C₄)-Alkylamino, Di-(C₁-C₄)-alkylamino, (C₁-C₆)-Alkyl, (C₃-C₆)-Cycloalkyl, wobei die 2 letztgenannten Reste durch v_{D} Substituenten aus der Gruppe Halogen, (C₁-C₄)-Alkoxy, Halogen-(C₁-C₆)-alkoxy und (C₁-C₄)-Alkylthio und im Falle cyclischer Reste auch (C₁-C₄)-Alkyl und (C₁-C₄)-Haloalkyl substituiert sind;
      - n_{D}: ist 0, 1 oder 2;
      - m_{D}: ist 1 oder 2;
      - v_{D}: ist 0, 1, 2 oder 3;
   davon bevorzugt sind Verbindungen von Typ der N-Acylsulfonamide, z.B. der nachfolgenden Formel (S-V), die z. B. bekannt sind aus WO 97/45016 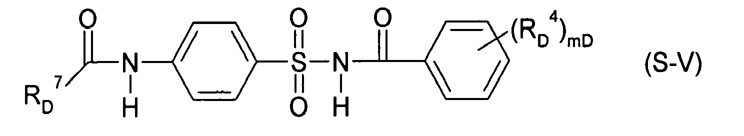 worin
   R_{D}⁷ (C₁-C₆)Alkyl, (C₃-C₆)Cycloalkyl, wobei die 2 letztgenannten Reste durch v_{D} Substituenten aus der Gruppe Halogen, (C₁-C₄)Alkoxy, Halogen-(C₁-C₆)alkoxy und (C₁-C₄)Alkylthio und im Falle cyclischer Reste auch (C₁-C₄)Alkyl und (C₁-C₄)Haloalkyl substituiert sind;
   R_{D}⁴ Halogen, (C₁-C₄)-Alkyl, (C₁-C₄)-Alkoxy, CF₃;
   m_{D} 1 oder 2 bedeutet;
   v_{D} ist 0, 1, 2 oder 3;
   sowie
   Acylsulfamoylbenzoesäureamide, z.B. der nachfolgenden Formel (S-VI), die z.B. bekannt sind aus WO 99/16744, 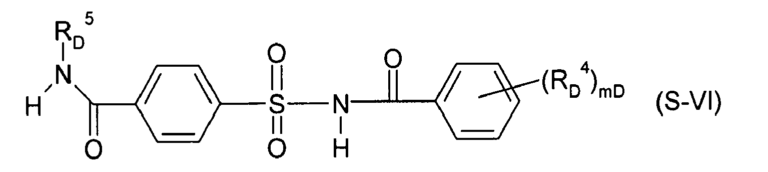 z.B. solche worin
   R_{D}⁵ = Cyclopropyl und (R_{D}⁴) = 2-OMe ist ("Cyprosulfamide", S3-1),
   R_{D}⁵ = Cyclopropyl und (R_{D}⁴) = 5-Cl-2-OMe ist (S3-2),
   R_{D}⁵ = Ethyl und (R_{D}⁴) = 2-OMe ist (S3-3),
   R_{D}⁵ = Isopropyl und (R_{D}⁴) = 5-Cl-2-OMe ist (S3-4) und
   R_{D}⁵ = Isopropyl und (R_{D}⁴) = 2-OMe ist (S3-5);
   sowie
   Verbindungen vom Typ der N-Acylsulfamoylphenylharnstoffe der Formel (S-VII), die z.B. bekannt sind aus der EP-A-365484, 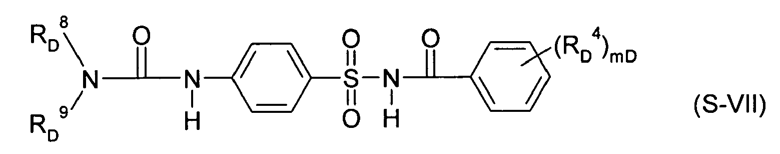 worin
   R_{D}⁸ und R_{D}⁹ unabhängig voneinander Wasserstoff, (C₁-C₈)-Alkyl, (C₃-C₈)-Cycloalkyl, (C₃-C₆)-Alkenyl, (C₃-C₆)-Alkinyl,
   R_{D}⁴ Halogen, (C₁-C₄)-Alkyl, (C₁-C₄)-Alkoxy, CF₃
   m_{D} 1 oder 2 bedeutet;
   davon insbesondere
   1-[4-(N-2-Methoxybenzoylsulfamoyl)phenyl]-3-methylhamstoff,
   1-[4-(N-2-Methoxybenzoylsulfamoyl)phenyl]-3, 3-d imethylharnstoff,
   1-[4-(N-4,5-Dimethylbenzoylsulfamoyl)phenyl]-3-methylharnstoff,
   1-[4-(N-Naphthoylsulfamoyl)phenyl]-3,3-dimethylharnstoff,
G) Wirkstoffe aus der Klasse der Hydroxyaromaten und der aromatischaliphatischen Carbonsäurederivate, z.B. 3,4,5-Triacetoxybenzoesäureethylester, 3,5-Dimethoxy-4-hydroxybenzoesäure, 3,5-Dihydroxybenzoesäure, 4-Hydroxysalicylsäure, 4-Fluorsalicycisäure, 1,2-Dihydro-2-oxo-6-trifluoromethylpyridin-3-carboxamid, 2-Hydroxyzimtsäure, 2,4-Dichlorzimtsäure, wie sie in der WO 2004084631, WO 2005015994, WO 2006007981, WO 2005016001 beschrieben sind;
H) Wirkstoffe aus der Klasse der 1,2-Dihydrochinoxalin-2-one, z.B. 1-Methyl-3-(2-thienyl)-1,2-dihydrochinoxalin-2-on, 1-Methyl-3-(2-thienyl)-1,2-dihydro-chinoxalin-2-thion, 1-(2-Aminoethyl)-3-(2-thienyl)-1,2-dihydro-chinoxalin-2-on-hydrochlorid, 1-(2-Methylsulfonylaminoethyl)-3-(2-thienyl)-1,2-dihydro-chinoxalin-2-on, wie sie in der WO 2005112630 beschrieben sind,
I) Wirkstoffe, die neben einer herbiziden Wirkung gegen Schadpflanzen auch Safenerwirkung an Kulturpflanzen wie Reis aufweisen, wie z. B. "Dimepiperate" oder "MY-93" (siehe Pestic. Man.) (= Piperidin-1-thiocarbonsäure-S-1-methyl-1-phenylethylester), das als Safener für Reis gegen Schäden des Herbizids Molinate bekannt ist,

   "Daimuron" oder "SK 23" (siehe Pestic. Man.) (= 1-(1-Methyl-1-phenylethyl)-3-p-tolyl-harnstoff), das als Safener für Reis gegen Schäden des Herbizids Imazosulfuron bekannt ist,
   "Cumyluron" = "JC-940" (= 3-(2-Chlorphenylmethyl)-1-(1-methyl-1-phenylethyl)harnstoff, siehe JP-A-60087254), das als Safener für Reis gegen Schäden einiger Herbizide bekannt ist,
   "Methoxyphenon" oder "NK 049" (= 3,3'-Dimethyl-4-methoxy-benzophenon), das als Safener für Reis gegen Schäden einiger Herbizide bekannt ist,
   "CSB" (= 1-Brom-4-(chlormethylsulfonyl)benzol) (CAS-Reg. Nr. 54091-06-4 von Kumiai), das als Safener gegen Schäden einiger Herbizide in Reis bekannt ist,
K) Verbindungen der Formel (S-IX),
   wie sie in der WO-A-1998/38856 beschrieben sind 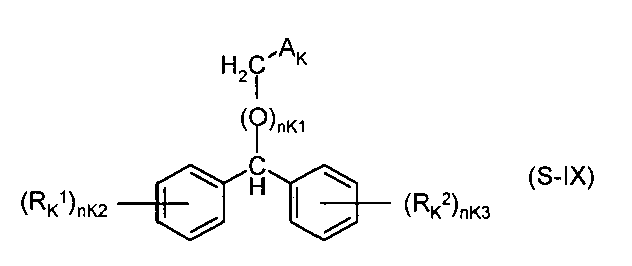 worin die Symbole und Indizes folgende Bedeutungen haben:
   R_{K}¹, R_{K}² unabhängig voneinander Halogen, (C₁-C₄)-Alkyl, (C₁-C₄)-Alkoxy, (C₁-C₄)-Haloalkyl, (C₁-C₄)-Alkylamino, Di-(C₁-C₄)-Alkylamino, Nitro;
   A_{K} COOR_{K}³ oder COOR_{K}⁴
   R_{K}³, R_{K}⁴ unabhängig voneinander Wasserstoff, (C₁-C₄)-Alkyl, (C₂-C₆)-Alkenyl, (C₂-C₄)-Alkinyl, Cyanoalkyl, (C₁-C₄)-Haloalkyl, Phenyl, Nitrophenyl, Benzyl, Halobenzyl, Pyridinylalkyl und Alkylammonium,
   n_{K}¹ 0 oder 1
   n_{K}², n_{K}³ unabhängig voneinander 0, 1 oder 2
   vorzugsweise: Methyl-(diphenylmethoxy)acetat (CAS-Regno: 41858-19-9),
L) Verbindungen der Formel (S-X),
   wie sie in der WO A-98/27049 beschrieben sind 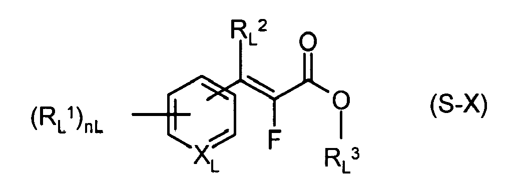 worin die Symbole und Indizes folgende Bedeutungen haben:
   X_{L} CH oder N,
   n_{L} für den Fall, dass X=N ist, eine ganze Zahl von 0 bis 4 und für den Fall, dass X=CH ist, eine ganze Zahl von 0 bis 5,
   R_{L}¹ Halogen, (C₁-C₄)-Alkyl, (C₁-C₄)-Haloalkyl, (C₁-C₄)-Alkoxy, (C₁-C₄)-Haloalkoxy, Nitro, (C₁-C₄)-Alkylthio, (C₁-C₄)-Alkylsulfonyl, (C₁-C₄)-Alkoxycarbonyl, ggf. substituiertes. Phenyl, ggf. substituiertes Phenoxy,
   R_{L}² Wasserstoff oder (C₁-C₄)-Alkyl
   R_{L}³ Wasserstoff, (C₁-C₈)-Alkyl, (C₂-C₄)-Alkenyl, (C₂-C₄)-Alkinyl, oder Aryl, wobei jeder der vorgenannten C-haltigen Reste unsubstituiert oder durch einen oder mehrere, vorzugsweise bis zu drei gleiche oder verschiedene Reste aus der Gruppe, bestehend aus Halogen und Alkoxy substituiert ist; oder deren Salze.
M) Wirkstoffe aus der Klasse der 3-(5-Tetrazolylcarbonyl)-2-chinolone, z.B. 1,2-Dihydro-4-hydroxy-1-ethyl-3-(5-tetrazolylcarbonyl)-2-chinolon (CAS-Regno: 219479-18-2), 1,2-Dihydro-4-hydroxy-1-methyl-3-(5-tetrazolyl-carbonyl)-2-chinolon (CAS-Regno: 95855-00-8), wie sie in der WO-A-1999000020 beschrieben sind,
N) Verbindungen der Formeln (S-XI) oder (S-XII)
   wie sie in der WO-A-2007023719 und WO-A-2007023764 beschrieben sind 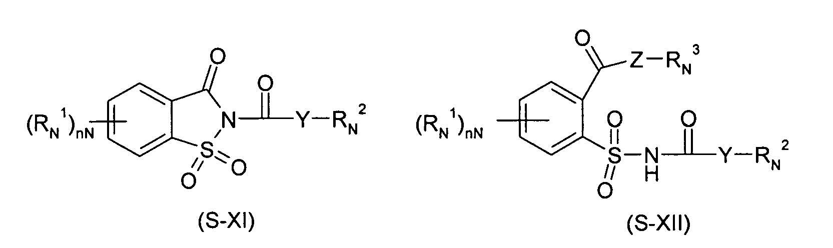 worin
   R_{N}¹ Halogen, (C₁-C₄)-Alkyl, Methoxy, Nitro, Cyano, CF₃, OCF₃
   Y, Z unabhängig voneinander O oder S,
   n_{N} eine ganze Zahl von 0 bis 4,
   R_{N}² (C₁-C₁₆)-Alkyl, (C₂-C₆)-Alkenyl, (C₃-C₆)-Cycloalkyl, Aryl; Benzyl, Halogenbenzyl,
   R_{N}³ Wasserstoff, (C₁-C₆)Alkyl bedeuten;
O) eine oder mehreren Verbindungen aus Gruppe:
   1,8-Naphthalsäureanhydrid,
   O,O-Diethyl S-2-ethylthioethyl phosphordithioat (Disulfoton),
   4-Chlorphenyl-methylcarbamat (Mephenate),
   O,O-Diethyl-O-phenylphosphorotioat (Dietholate),
   4-Carboxy-3,4-dihydro-2H-1-benzopyran-4-essigsäure (CL-304415, CAS-Regno: 31541-57-8),
   2-propenyl 1-oxa-4-azaspiro[4.5]decane-4-carbodithioate (MG-838, CAS-Regno: 133993-74-5),
   Methyl-[(3-oxo-1H-2-benzothiopyran-4(3H)-yliden)methoxy]acetate (aus WO-A-98/13361; CAS-Regno: 205121-04-6),
   Cyanomethoxyimino(phenyl)acetonitril (Cyometrinil),
   1,3-Dioxolan-2-ylmethoxyimino(phenyl)acetonitril (Oxabetrinil),
   4'-Chlor-2,2,2-trifluoracetophenon-O-1,3-dioxolan-2-ylmethyloxim (Fluxofenim),
   4,6-Dichlor-2-phenylpyrimidin (Fenclorim),
   Benzyl-2-chlor-4-trifluormethyl-1,3-thiazol-5-carboxylat (Flurazole),
   2-Dichlormethyl-2-methyl-1,3-dioxolan (MG-191),
einschließlich der Stereoisomeren und der in der Landwirtschaft gebräuchlichen Salze.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Einige der Safener sind bereits als Herbizide bekannt und entfalten somit neben der Herbizidwirkung bei Schadpflanzen zugleich auch Schutzwirkung bei den Kulturpflanzen.

Die Gewichtsverhältnisse von Herbizid(mischung) zu Safener hängt im Allgemeinen von der Aufwandmenge an Herbizid und der Wirksamkeit des jeweiligen Safeners ab und kann innerhalb weiter Grenzen variieren, beispielsweise im Bereich von 200:1 bis 1:200, vorzugsweise 100:1 bis 1:100, insbesondere 20:1 bis 1:20. Die Safener können analog den Verbindungen der Formel (I) oder deren Mischungen mit weiteren Herbiziden/Pestiziden formuliert werden und als Fertigformulierung oder Tankmischung mit den Herbiziden bereitgestellt und angewendet werden.

Mit den äußeren Bedingungen wie Temperatur, Feuchtigkeit, der Art des verwendeten Herbizids, u.a. variiert die erforderliche Aufwandmenge der erfindungsgemäßen Verbindungen der Formel (I). Sie kann innerhalb weiter Grenzen schwanken, z.B. zwischen 0,001 und 10000 g/ha oder mehr Aktivsubstanz, vorzugsweise liegt sie jedoch zwischen 0,5 und 5000 g/ha, bevorzugt zwischen 0.5 und 1000 g/ha und ganz besonders bevorzugt zwischen 0.5 und 500 g/ha.

Die erfindungsgemäßen Wirkstoffe können z.B. bei den folgenden Pflanzen verwendet werden:

Dikotyle Unkräuter der Gattungen: Abutilon, Amaranthus, Ambrosia, Anoda, Anthemis, Aphanes, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Dikotyle Kulturen der Gattungen: Arachis, Cucumis, Cucurbita, Daucus, Glycine, Gossypium, Linum, Lycopersicon, Nicotiana, Pisum, Solanum, Vicia.

Monokotyle Unkräuter der Gattungen: Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum.

Monokotyle Kulturen der Gattungen: Allium, Ananas, Asparagus, Avena, Hordeum, Oryza, Panicum, Saccharum, Secale, Sorghum, Triticale, Triticum, Zea.

Die Verwendung der erfindungsgemäßen Wirkstoffe ist jedoch keineswegs auf diese Gattungen beschränkt, sondern erstreckt sich in gleicher Weise auch auf andere Pflanzen.

Die erfindungsgemäßen Salze, insbesondere die Verbindungen der Formel (I), eignen sich auch zur Totalunkrautbekämpfung, z.B. auf Industrie- und Gleisanlagen und auf Wegen und Plätzen mit und ohne Baumbewuchs. Ebenso können die erfindungsgemäßen Wirkstoffe zur Unkrautbekämpfung in Dauerkulturen, z.B. Forst, Ziergehölz-, Obst-, Wein-, Citrus-, Nuss-, Bananen-, Kaffee-, Tee-, Gummi-, Ölpalm-, Kakao-, Beerenfrucht- und Hopfenanlagen, auf Zier- und Sportrasen und Weideflächen sowie zur selektiven Unkrautbekämpfung in einjährigen Kulturen eingesetzt werden.

Die erfindungsgemäßen Verbindungen der Formel (I), zeigen starke herbizide Wirksamkeit und ein breites Wirkungsspektrum bei Anwendung auf dem Boden und auf oberirdische Pflanzenteile.

Die Herstellung und die Verwendung der erfindungsgemäßen Wirkstoffe gehen aus den nachfolgenden Beispielen hervor.

### A. Synthesebeispiele

### Kalium {[3-(5,6-dihydro-1,4,2-dioxazin-3-yl)pyridin-2-yl]sulfonyl}[(4,6-dimethoxypyrimidin-2-yl)carbamoyl]azanide

10,6 g (0,025 mol) 3-(5,6-Dihydro-1,4,2-dioxazin-3-yl)-N-[(4,6-dimethoxypyrimidin-2-yl)carbamoyl]pyridin-2-sulfonamid werden in 750 ml Acetonitril aufgenommen und erwärmt, bis eine klare Lösung entsteht. Unter Rühren werden 2,9 g (0,025 mol) Kalium-tert. Butylat zugefügt. Nach 16 Stunden Rühren hat sich eine homogene Suspension gebildet, die unter Vakuum aufkonzentriert wird. Der ausgefallene Feststoff wird abgesaugt, mit etwas Acetonitril und Diethylether nachgewaschen und getrocknet. Man erhält 10.0 g Kalium {[3-(5,6-dihydro-1,4,2-dioxazin-3-yl)pyridin-2-yl]sulfonyl}[(4,6-dimethoxypyrimidin-2-yl)carbamoyl]azanide (0,0216 mol, Gehalt HPLC: 98 %, 86,6 % der Theorie) vom Schmelzpunkt 162-164 °C.

### Lithium {[3-(5,6-dihydro-1,4,2-dioxazin-3-yl)pyridin-2-yl]sulfonyl}[(4,6-dimethoxypyrimidin-2-yl)carbamoyl]azanide

10,6 g (0,025 mol) 3-(5,6-Dihydro-1,4,2-dioxazin-3-yl)-N-[(4,6-dimethoxypyrimidin-2-yl)carbamoyl]pyridin-2-sulfonamid werden in 750 ml Acetonitril aufgenommen und erwärmt, bis eine klare Lösung entsteht. Unter Rühren werden 2,1 g (0,025 mol) Lithium-tert. Butylat zugefügt. Nach 16 Stunden Rühren hat sich eine homogene Suspension gebildet, die unter Vakuum aufkonzentriert wird. Der ausgefallene Feststoff wird abgesaugt, mit etwas Acetonitril und Diethylether nachgewaschen und getrocknet. Man erhält 11,3 g Lithium {[3-(5,6-dihydro-1,4,2-dioxazin-3-yl)pyridin-2-yl]sulfonyl}[(4,6-dimethoxypyrimidin-2-yl)carbamoyl]azanide (0,0216 mol, Gehalt HPLC: 96,4 %, 100,0 % der Theorie) vom Schmelzpunkt 194-196 °C.

### 2-Hydroxy-N-(2-hydroxyethyl)ethanaminium {[3-(5,6-dihydro-1,4,2-dioxazin-3-yl)pyridin-2-yl]sulfonyl}[(4,6-dimethoxypyrimidin-2-yl)carbamoyl]azanide

5,8 g (0,0137 mol) 3-(5,6-Dihydro-1,4,2-dioxazin-3-yl)-N-[(4,6-dimethoxypyrimidin-2-yl)carbamoyl]pyridin-2-sulfonamid werden in 300 ml Acetonitril aufgenommen und erwärmt, bis eine klare Lösung entsteht. Unter Rühren werden 1,3 g (0,0124 mol)

Diethanolamin zugetropft, worauf bald ein weißer Feststoff ausfällt. Man lässt 16 Stunden bei Raumtemperatur nachrühren. Der Feststoff wird abgesaugt, mit Acetonitril nachgewaschen und getrocknet. Man erhält 6,2 g 2-Hydroxy-N-(2-hydroxyethyl)ethanaminium {[3-(5,6-dihydro-1,4,2-dioxazin-3-yl)pyridin-2-yl]sulfonyl}[(4,6-dimethoxypyrimidin-2-yl)carbamoyl]azanide (0,0116 mol, Gehalt HPLC: 98,9 %, 93,6 % der Theorie).
¹H-NMR (400 MHz, [D6]-DMSO): δ = 2.96 (t, 4H); 3.62 (br. t, 4H); 3.80 (s, 6H); 4.16 (m, 2H); 4.40 (m, 2H); 5.09 (br. s, 2H); 5.68 (s, 1H); 7.52 (m, 1H); 7.87 (m, 1H); 8.64 (m, 1H); 8.1-8.9 (br., 1H) ppm

### Propan-2-aminium {[3-(5,6-dihydro-1,4,2-dioxazin-3-yl)pyridin-2-yl]sulfonyl)[(4,6-dimethoxypyrimidin-2-yl)carbamoyl]azanide

5,8 g (0,0137 mol) 3-(5,6-Dihydro-1,4,2-dioxazin-3-yl)-N-[(4,6-dimethoxypyrimidin-2-yl)carbamoyl]pyridin-2-sulfonamid werden in 300 ml Acetonitril aufgenommen und erwärmt, bis eine klare Lösung entsteht. Unter Rühren werden 800 mg (13,5 mmol) Isopropylamin zugetropft, worauf bald ein weißer Feststoff ausfällt. Man lässt 16 Stunden bei Raumtemperatur nachrühren. Der Feststoff wird abgesaugt, mit Acetonitril nachgewaschen und getrocknet. Man erhält 5,2 g Propan-2-aminium {[3-(5,6-dihydro-1,4,2-dioxazin-3-yl)pyridin-2-yl]sulfonyl}[(4,6-dimethoxypyrimidin-2-yl)carbamoyl]azanide (0,0105 mol, Gehalt HPLC: 98.0%, 77,9 % der Theorie). ¹H-NMR (400 MHz, [D6]-DMSO): δ = 1.15 (d, 6H); 3.28 (m, 1H); 3.79 (s, 6H); 4.16 (m, 2H); 4.39 (m, 2H); 5.65 (s, 1H); 7.48 (m, 1H); 7.5-7.8 (br., 1H); 7.83 (m, 1H); 8.61 (m, 1H) ppm

### Ammonium {[3-(5,6-dihydro-1,4,2-dioxazin-3-yl)pyridin-2-yl]sulfonyl}[(4,6-dimethoxypyrimidin-2-yl)carbamoyl]azanide

10,6 g (0,025 mol) 3-(5,6-Dihydro-1,4,2-dioxazin-3-yl)-N-[(4,6-dimethoxypyrimidin-2-yl)carbamoyl]pyridin-2-sulfonamid werden in 750 ml Acetonitril aufgenommen und erwärmt, bis eine klare Lösung entsteht. Unter Rühren werden 1,7 g einer 26 %igen wässrigen Ammoniak-Lösung (0,026 mol) zugetropft, worauf bald ein weißer Feststoff ausfällt. Man lässt 16 Stunden bei Raumtemperatur nachrühren, dann wird vorsichtig im Vakuum aufkonzentriert. Der weiße Feststoff wird abgesaugt, mit Acetonitril nachgewaschen und getrocknet. Man erhält 9,1 g Ammonium {[3-(5,6-dihydro-1,4,2-dioxazin-3-yl)pyridin-2-yl]sulfonyl}[(4,6-dimethoxypyrimidin-2-yl)carbamoyl]azanide (0,0206 mol, Gehalt HPLC: 100%), 82,5 % der Theorie). ¹H-NMR (400 MHz, [D6]-DMSO): δ = 3.84 (s, 6H); 4.18 (m, 2H); 4.43 (m, 2H); 5.83 (br. s, 1H); 6.5-9.5 (br., 4H); 7.64 (br., 1H); 8.01 (br., 1H); 8.70 (m, 1H) ppm

### 2-Hydroxy-N,N,N-trimethylethanaminium {[3-(5,6-dihydro-1,4,2-dioxazin-3-yl)pyridin-2-yl]sulfonyl}[(4,6-dimethoxypyrimidin-2-yl)carbamoyl]azanide

9,0 g (0,020 mol) Natrium {[3-(5,6-dihydro-1,4,2-dioxazin-3-yl)pyridin-2-yl]sulfonyl}[(4,6-dimethoxypyrimidin-2-yl)carbamoyl]azanide werden in 600 ml Methanol suspendiert. Unter Rühren werden 2,8 g (0,020 mol) Cholinium-chlorid und 100 ml Wasser zugesetzt. Dann wird erwärmt, bis eine klare Lösung entsteht. Man lässt 16 Stunden bei Raumtemperatur nachrühren, wobei eine Trübung auftritt. Man engt im Vakuum zur Trockne ein und nimmt in Isopropanol auf. Der weiße Feststoff wird abgesaugt, mit Diethylether gewaschen und getrocknet. Man erhält 11,1 g 2-Hydroxy-N,N,N-trimethyl-ethanaminium {[3-(5,6-dihydro-1,4,2-dioxazin-3-yl)pyridin-2-yl]sulfonyl}[(4,6-dimethoxypyrimidin-2-yl)carbamoyl]azanide (0,0187 mol, Gehalt HPLC: 99,2 %, 93,3% der Theorie) im Gemisch mit Natriumchlorid.
Schmp.: 126-130 °C (Zers.)

### 2-Chloro-N,N,N-trimethylethanaminium {[3-(5,6-dihydro-1,4,2-dioxazin-3-yl)pyridin-2-yl]sulfonyl}[(4,6-dimethoxypyrimidin-2-yl)carbamoyl]azanide

9,0 g (0,020 mol) Natrium {[3-(5,6-dihydro-1,4,2-dioxazin-3-yl)pyridin-2-yl]sulfonyl}[(4,6-dimethoxypyrimidin-2-yl)carbamoyl]azanide werden in 600 ml Methanol suspendiert. Unter Rühren werden 3,2 g (0,020 mol) 2-Chloro-N,N,N-trimethylethanaminium chloride und 100 ml Wasser zugesetzt. Dann wird erwärmt, bis eine klare Lösung entsteht. Man lässt 16 Stunden bei Raumtemperatur nachrühren, wobei ein Niederschlag auftritt. Man engt im Vakuum zur Trockne ein und nimmt in Isopropanol auf. Der weiße Feststoff wird abgesaugt, mit Diethylether gewaschen und getrocknet. Man erhält 9,5 g
2-Chloro-N,N,N-trimethylethanaminium {[3-(5,6-dihydro-1,4,2-dioxazin-3-yl)pyridin-2-yl]sulfonyl}[(4,6-dimethoxypyrimidin-2-yl)carbamoyl]azanide (0,0153 mol, Gehalt HPLC: 98,5 %, 76,7% der Theorie) im Gemisch mit Natriumchlorid.
Schmp.: 120-126 °C (Zers.)

### 2-(Acetyloxy)-N,N,N-trimethylethanaminium {[3-(5,6-dihydro-1,4,2-dioxazin-3-yl)pyridin-2-yl]sulfonyl}[(4,6-dimethoxypyrimidin-2-yl)carbamoyl]azanide

9,0 g (0,020 mol) Natrium {[3-(5,6-dihydro-1,4,2-dioxazin-3-yl)pyridin-2-yl]sulfonyl}[(4,6-dimethoxypyrimidin-2-yl)carbamoyl]azanide werden in 600 ml Methanol suspendiert. Unter Rühren werden 3,7 g (0,020 mol) 2-(Acetyloxy)-N,N,N-trimethylethanaminium chloride und 100 ml Wasser zugesetzt. Dann wird erwärmt, bis eine klare Lösung entsteht. Man lässt 16 Stunden bei Raumtemperatur nachrühren, wobei eine Trübung auftritt. Man engt im Vakuum zur Trockne ein und nimmt in Isopropanol auf. Der weiße Feststoff wird abgesaugt, mit Diethylether gewaschen und getrocknet. Man erhält 9,2 g 2-(Acetyloxy)-N,N,N-trimethylethanaminium {[3-(5,6-dihydro-1,4,2-dioxazin-3-yl)pyridin-2-yl]sulfonyl}[(4,6-dimethoxypyrimidin-2-yl)carbamoyl]azanide (0,0131 mol, Gehalt HPLC: 90,2 %, 65,3% der Theorie)) im Gemisch mit Natriumchlorid.
Schmp.: > 138 °C (Zers.)

### 2-Hydroxy-N,N-bis(2-hydroxyethyl)ethanaminium {[3-(5,6-dihydro-1,4,2-dioxazin-3-yl)pyridin-2-yl]sulfonyl}[(4,6-dimethoxypyrimidin-2-yl)carbamoyl]azanide

10,0 g (0,0217 mol) 3-(5,6-Dihydro-1,4,2-dioxazin-3-yl)-N-[(4,6-dimethoxypyrimidin-2-yl)carbamoyl]pyridin-2-sulfonamid werden in 600 ml Acetonitril aufgenommen und erwärmt, bis eine klare Lösung entsteht. Unter Rühren werden 3,23 g (0,0217 mol) Tris-(2-hydroxyethyl)amin zugetropft. Man lässt 16 Stunden bei Raumtemperatur nachrühren, wobei mit der Zeit ein weißer Feststoff ausfällt. Der Feststoff wird abgesaugt, mit Acetonitril nachgewaschen und getrocknet. Man erhält 9,2 g 2-Hydroxy-N,N-bis(2-hydroxyethyl)ethanaminium {[3-(5,6-dihydro-1,4,2-dioxazin-3-yl)pyridin-2-yl]sulfonyl}[(4,6-dimethoxypyrimidin-2-yl)carbamoyl]azanide (0,0160 mol, Gehalt HPLC: 100 %, 74,0 % der Theorie).
¹H-NMR (400 MHz, [D6]-DMSO): δ = 2.7-3.2 (br. s, 6H); 3.5-3.7 (br. s, 6H); 3.84 (br. s, 6H); 4.18 (m, 2H); 4.43 (m, 2H); 4.5-5.2 (br. 3H); 5.84 (br. s, 1H); 7.65 (br. s, 1H); 8.0 (br. s, 1H); 8.7 (br. m, 1H) ppm

### 2-Hydroxyethanaminium {[3-(5,6-dihydro-1,4,2-dioxazin-3-yl)pyridin-2-yl]sulfonyl}[(4,6-dimethoxypyrimidin-2-yl)carbamoyl]azanide

5,0 g (10,84 mmol) 3-(5,6-Dihydro-1,4,2-dioxazin-3-yl)-N-[(4,6-dimethoxypyrimidin-2-yl)carbamoyl]pyridin-2-sulfonamid werden in 300 ml Acetonitril aufgenommen und erwärmt, bis eine klare Lösung entsteht. Unter Rühren werden 0,66 g (10,84 mmol) 2-Aminoethanol zugetropft. Man lässt 16 Stunden bei Raumtemperatur nachrühren, wobei mit der Zeit ein weißer Feststoff ausfällt. Der Feststoff wird abgesaugt, mit Acetonitril nachgewaschen und getrocknet. Man erhält 4,2 g 2-Hydroxyethanaminium {[3-(5,6-dihydro-1,4,2-dioxazin-3-yl)pyridin-2-yl]sulfonyl}[(4,6-dimethoxypyrimidin-2-yl)carbamoyl]azanide (8,3 mmol, Gehalt HPLC: 95,5 %, 76,2 % der Theorie).
¹H-NMR (400 MHz, [D6]-DMSO): δ = 2.82 (t, 2H); 3.54 (br. t, 2H); 3.78 (s, 6H); 4.16 (m, 2H); 4.39 (m, 2H); 5.05 (br. s, 1H); 5.64 (s, 1H); 7.1-7.5 (br., 3H); 7.48 (m, 1H); 7.83 (m, 1H); 8.61 (m, 1H) ppm

Die in der nachfolgenden Tabelle 1 beschriebenen Verbindungen werden wie direkt zuvor beschrieben oder analog zu den obigen Beispielen erhalten.

**Tabelle 1: Verbindungen der allgemeinen Formel (I), wobei durch M das Kation des jeweiligen Salzes bezeichnet ist**

| | | |
|---|---|---|
| 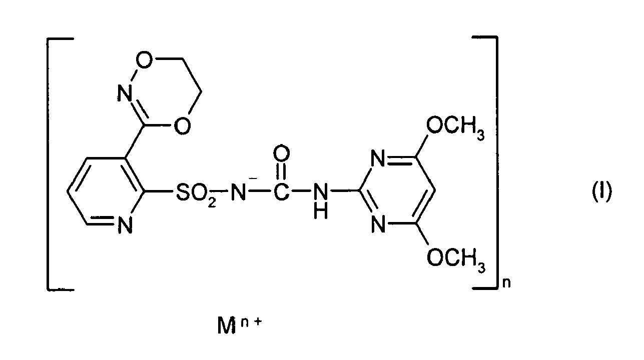 | | |

| Verbindung | M | n |
|---|---|---|
| I-1 | Lithium | 1 |
| I-2 | Kalium | 1 |
| I-3 | Magnesium | 2 |
| I-4 | Calcium | 2 |
| I-5 | Ammonium | 1 |
| I-6 | Methylammonium | 1 |
| I-7 | Dimethylammonium | 1 |
| I-8 | Tetramethylammonium | 1 |
| I-9 | Ethylammonium | 1 |
| I-10 | Diethylammonium | 1 |
| I-11 | Tetraethylammonium | 1 |
| I-12 | Propylammonium | 1 |
| I-13 | Tetrapropylammonium | 1 |
| I-14 | Isopropylammonium | 1 |
| I-15 | Diisopropylammonium | 1 |
| I-16 | Butylammonium | 1 |
| I-17 | Tetrabutylammonium | 1 |
| I-18 | (2-Hydroxyeth-1-yl)ammonium | 1 |
| I-19 | Bis-N,N-(2-hydroxyeth-1-yl)ammonium | 1 |
| I-20 | Tris-N,N,N-(2-hydroxyeth-1-yl)ammonium | 1 |
| I-21 | 1-Phenylethylammonium | 1 |
| I-22 | 2-Phenylethylammonium | 1 |
| I-23 | Trimethylsulfonium | 1 |
| I-24 | Trimethyloxonium | 1 |
| I-25 | Pyridinium | 1 |
| I-26 | 2-Methylpyridinium | 1 |
| I-27 | 4-Methylpyridinium | 1 |
| I-28 | 2,4-Dimethylpyridinium | 1 |
| I-29 | 2,6-Dimethylpyridinium | 1 |
| I-30 | Piperidinium | 1 |
| I-31 | Imidazolium | 1 |
| I-32 | Morpholinium | 1 |
| I-33 | 1,5-Diazabicyclo[4.3.0]non-7-enium | 1 |
| I-34 | 1,8-Diazabicyclo[5.4.0]undec-7-enium | 1 |
| I-35 | Diethanolammonium | 1 |
| I-36 | Ethanolammonium | 1 |
| I-37 | Trisethanolammonium | 1 |
| I-38 | Cholinium | 1 |
| I-39 | Chlorcholinium | 1 |
| I-40 | Acetylcholinium | 1 |

### B. Formulierungsbeispiele

a) Ein Stäubemittel wird erhalten, indem man 10 Gew.-Teile einer erfindungsgemäßen Verbindung der Formel (I) und 90 Gew.-Teile Talkum als Inertstoff mischt und in einer Schlagmühle zerkleinert.
b) Ein in Wasser leicht dispergierbares, benetzbares Pulver wird erhalten, indem man 25 Gewichtsteile einer erfindungsgemäßen Verbindung der Formel (I), 64 Gew.-Teile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gew.-Teile einer erfindungsgemäßen Verbindung der Formel (I) mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis über 277 C) mischt und in einer Reibkugelmühle auf eine Feinheit von unter 5 Mikron vermahlt.
d) Ein emulgierbares Konzentrat wird erhalten aus 15 Gew.-Teilen einer erfindungsgemäßen Verbindung der Formel (I), 75 Gew.-Teilen Cyclohexanon als Lösungsmittel und 10 Gew.-Teilen oxethyliertes Nonylphenol als Emulgator.
e) Ein in Wasser dispergierbares Granulat wird erhalten indem man
   75 Gew.-Teile einer erfindungsgemäßen Verbindung der Formel (I),
   10 Gew.-Teile ligninsulfonsaures Calcium,
   5 Gew.-Teile Natriumlaurylsulfat,
   3 Gew.-Teile Polyvinylalkohol und
   7 Gew.-Teile Kaolin
   mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man
   25 Gew.-Teile einer erfindungsgemäßen Verbindung der Formel (I),
   5 Gew.-Teile 2,2'-dinaphthylmethan-6,6'-disulfonsaures Natrium
   2 Gew.-Teile oleoylmethyltaurinsaures Natrium,
   1 Gew.-Teil Polyvinylalkohol,
   17 Gew.-Teile Calciumcarbonat und
   50 Gew.-Teile Wasser
   auf einer Kolloidmühle homogenisiert und vorzerkleinert, anschließend auf einer Perlmühle mahlt und die so erhaltene Suspension in einem Sprühturm
   mittels einer Einstoffdüse zerstäubt und trocknet.

### C. Biologische Beispiele

### 1, Unkrautwirkung im Nachauflauf

Samen bzw. Rhizomstücke von mono- und dikotylen Unkräutern wurden in Plastiktöpfen (Jiffy-Töpfen) in sandigem Lehmboden ausgelegt, mit Erde abgedeckt und im Gewächshaus unter guten und definierten Wachstumsbedingungen, d.h. bei einem Tag-/Nacht-Rhythmus von 22°C/14°C, angezogen. Danach wurden die Pflanzen im 2-4 Blattstadium mit einer wässrigen Prüflösung verschiedener erfindungsgemäßer Verbindungen in der angegebenen Dosierung behandelt. Nach vier Wochen wurde nach folgendem Schema bonitiert:
0 = Kein Schaden; 100 = Vollständige Bekämpfung

Als Kontrolle wurde das Na⁺-Salz des 3-(5,6-dihydro-1,4,2-dioxazin-3-yl)-N-[(4,6-dimethoxypyrimidin-2-yl)carbamoyl]pyridine-2-sulfonamids eingesetzt, das bereits aus der US 5,476,936 bekannt ist.

**gemäß Tabelle 1**

| Verbindung | g a.i./ha | ELEIN | AMBEL |
|---|---|---|---|
| Kontrolle | 5 | 75 | 20 |
| I-1 | 5 | 85 | 80 |
| I-2 | 5 | 80 | 80 |
| I-5 | 5 | 80 | 75 |
| I-14 | 5 | 80 | 90 |
| I-35 | 5 | 80 | 85 |
| I-38 | 5 | 85 | 80 |
| I-39 | 5 | 93 | 80 |
| I-40 | 5 | 93 | 80 |

| | | | |
|---|---|---|---|
| ELEIN = Eleusine indica AMBEL = Ambrosia elatior Kontrolle = Na⁺-Salz des 3-(5,6-Dihydro-1,4,2-dioxazin-3-yl)-N-[(4,6- dimethoxypyrimidin-2-yl)carbamoyl]pyridin-2-sulfonamids I-1, I-2, I-5, I-14, I-35., I-38, I-39, I-40 = erfindungsgemäße Verbindungen | | | |

Obwohl bereits das Natrium Salz des 3-(5,6-Dihydro-1,4,2-dioxazin-3-yl)-N-[(4,6-dimethoxypyrimidin-2-yl)carbamoyl]pyridin-2-sulfonamids zumindest hinsichtlich des monokotylen Unkrauts (Eleusine indica) bereits eine gute Kontrollwirkung zeigt, wird diese jedoch deutlich bei Einsatz der erfindungsgemäß beanspruchten Salze des 3-(5,6-Dihydro-1,4,2-dioxazin-3-yl)-N-[(4,6-dimethoxypyrimidin-2-yl)carbamoyl]pyridin-2-sulfonamids, d.h. der hier beispielhaft verwendeten Verbindungen I-1, I-2, I-5, I-14, I-35, I-38, I-39 und I-40 deutlich übertroffen. Besonders deutlich wird der Unterschied zwischen dem literaturbekannten Natrium-Salz und den erfindungsgemäßen Salzen bei der Beurteilung der Wirksamkeit des dikotylen Unkrauts Ambrosia elatior, das durch das Natrium Salz des 3-(5,6-Dihydro-1,4,2-dioxazin-3-yl)-N-[(4,6-dimethoxypyrimidin-2-yl)carbamoyl]pyridin-2-sulfonamids relativ schwach bekämpft wird, wohingegen die erfindungsgemäßen Salze des 3-(5,6-Dihydro-1,4,2-dioxazin-3-yl)-N-[(4,6-dimethoxypyrimidin-2-yl)carbamoyl]pyridin-2-sulfonamids mindestens eine Kontrolle von 75% (I-5) in allen Fällen aber von mindestens 80% zeigen.

### 1. Unkrautwirkung im Vorauflauf

Samen bzw. Rhizomstücke von mono- und dikotylen Unkrautpflanzen wurden in Papptöpfen in sandiger Lehmerde ausgelegt und mit Erde abgedeckt. Die in Form von benetzbaren Pulvern oder Emulsionskonzentraten formulierten erfindungsgemäßen Verbindungen wurden dann als wässrige Suspensionen bzw. Emulsionen mit einer Wasseraufwandmenge von umgerechnet 100 bis 800 I/ha in unterschiedlichen Dosierungen auf die Oberfläche der Abdeckerde appliziert.

Nach der Behandlung wurden die Töpfe im Gewächshaus aufgestellt und unter guten Wachstumsbedingungen für die Unkräuter gehalten. Die optische Bonitur der Pflanzen- bzw. Auflaufschäden erfolgte nach dem Auflaufen der Versuchspflanzen nach einer Versuchszeit von 3 bis 4 Wochen im Vergleich zu unbehandelten Kontrollen. Wie die Ergebnisse zeigen, weisen erfindungsgemäße Verbindungen eine gute herbizide Vorauflaufwirksamkeit gegen ein breites Spektrum von Ungräsern und Unkräutern auf.

Beispielsweise haben die Verbindungen Nr. I-1, I-2, I-5, I-14, I-35., I-38, I-39, I-40 aus Tabelle 1 auch sehr gute herbizide Wirkung gegen Schadpflanzen wie, Matricaria inodora, Papaver rhoeas, Stellaria media, und Viola tricolor im Vorauflaufverfahren bei einer Aufwandmenge von 0.08 kg und weniger Aktivsubstanz pro Hektar.

### 3. Kulturpflanzenverträglichkeit

In weiteren Versuchen im Gewächshaus wurden Samen einer größeren Anzahl von Kulturpflanzen und Unkräutern in sandigem Lehmboden ausgelegt und mit Erde abgedeckt. Ein Teil der Töpfe wurde sofort wie unter Abschnitt 1 beschrieben behandelt, die übrigen im Gewächshaus aufgestellt, bis die Pflanzen zwei bis drei echte Blätter entwickelt haben und dann wie unter Abschnitt 2 beschrieben mit den erfindungsgemäßen Verbindungen in unterschiedlichen Dosierungen besprüht. Vier bis fünf Wochen nach der Applikation und Standzeit im Gewächshaus wurde mittels optischer Bonitur festgestellt, dass die erfindungsgemäßen Salze, Leguminosen im Vor- und Nachauflaufverfahren selbst bei hohen Wirkstoffdosierungen ungeschädigt ließen. Die erfindungsgemäßen Salze zeigen in diesen Kulturen eine hohe Selektivität und eignen sich deshalb zur Bekämpfung von unerwünschtem Pflanzenwuchs in Leguminosen.

## Patentansprüche

1. Agrochemisch wirksame Salze des 3-(5,6-Dihydro-1,4,2-dioxazin-3-yl)-N-[(4,6-dimethoxypyrimidin-2-yl)carbamoyl]pyridin-2-sulfonamids mit der allgemeinen Formel (I) 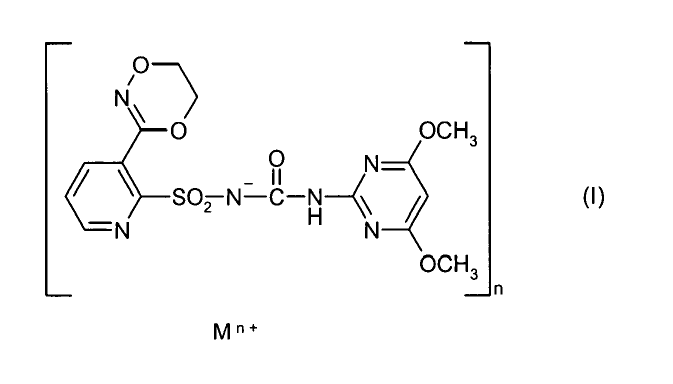 wobei das Kation M
(a) ein Lithium- oder Kalium-Ion, oder
(b) ein Ion der Erdalkalimetalle, oder
(c) ein Ion der Übergangsmetalle, oder
(d) ein Ammonium-Ion, bei dem gegebenenfalls ein, zwei, drei oder alle vier Wasserstoffatome, durch gleiche oder verschiedene Reste aus der Gruppe (C₁-C₄)-Alkyl, Hydroxy-(C₁-C₄)-alkyl, acyliertes Hydroxy-(C₁-C₄)-alkyl, (C₃-C₆)-Cycloalkyl, (C₁-C₄)-Alkoxy-(C₁-C₄)-alkyl, Hydroxy-(C₁-C₄)-alkoxy-(C₁-C₄)-alkyl, (C₁-C₆)-Mercaptoalkyl, Phenyl oder Benzyl substituiert sind, wobei die zuvor genannten Reste gegebenenfalls durch einen oder mehrere, gleiche oder verschiedene Reste aus der Gruppe Halogen, wie F, Cl, Br oder I, Nitro, Cyano, Azido, (C₁-C₆)-Alkyl, (C₁-C₆)-Haloalkyl, (C₃-C₆)-Cycloalkyl, (C₁-C₆)-Alkoxy, (C₁-C₆)-Haloalkoxy und Phenyl substituiert sind, und wobei jeweils zwei Substituenten am N-Atom zusammen gegebenfalls einen unsubstituierten oder substituierten Ring bilden, oder
(e) ein Phosphonium-Ion, oder
(f) ein Sulfonium-Ion, oder
(g) ein Oxonium-Ion, oder
(h) eine gegebenenfalls einfach oder mehrfach annellierte und/oder durch (C₁-C₄)-Alkyl substituierte gesättigte oder ungesättigte/aromatische N-haltige heterocyclische ionische Verbindung mit 1-10 C-Atomen im Ringsystem
ist,
und n einer Zahl 1, 2 oder 3 entspricht.

2. Verbindungen gemäß Anspruch 1, **dadurch gekennzeichnet, dass** das Kation M
(a) ein Lithium- oder Kalium-Ion, oder
(b) ein Calcium- oder Magnesium-Ion, oder
(c) ein Mangan-, Kupfer-, Zink- oder Eisen-Ion, oder
(d) ein Ammonium-Ion, bei dem gegebenenfalls ein, zwei, drei oder alle vier Wasserstoffatome, durch gleiche oder verschiedene Reste aus der Gruppe (C₁-C₄)-Alkyl, Hydroxy-(C₁-C₄)-alkyl, acyliertes Hydroxy-(C₁-C₄)-alkyl, (C₃-C₄)-Cycloalkyl, (C₁-C₂)-Alkoxy-(C₁-C₂)-alkyl, Hydroxy-(C₁-C₂)-alkoxy-(C₁-C₂)-alkyl, (C₁-C₂)-Mercaptoalkyl, Phenyl oder Benzyl substituiert sind, wobei die zuvor genannten Reste gegebenenfalls durch einen oder mehrere, gleiche oder verschiedene Reste aus der Gruppe Halogen, wie F, Cl, Br oder I, Nitro, Cyano, Azido, (C₁-C₂)-Alkyl, (C₁-C₂)-Haloalkyl, (C₃-C₄)-Cycloalkyl, (C₁-C₂)-Alkoxy, (C₁-C₂)-Haloalkoxy und Phenyl substituiert sind, und wobei jeweils zwei Substituenten am N-Atom zusammen gegebenfalls einen unsubstituierten oder substituierten Ring bilden, oder
(e) ein Tetra-((C₁-C₄)-alkyl)-phosphonium-Ion oder Tetraphenyl-phosphonium-Ion, wobei die (C₁-C₄)-Alkylreste und die Phenylreste gegebenenfalls einfach oder mehrfach mit gleichen oder verschiedenen Resten aus der Gruppe Halogen, wie F, Cl, Br oder I, (C₁-C₂)-Alkyl, (C₁-C₂)-Haloalkyl, (C₃-C₄)-Cycloalkyl, (C₁-C₂)-Alkoxy und (C₁-C₂)-Haloalkoxy substituiert sind, oder
(f) ein Tri-((C₁-C₄)-alkyl)-sulfonium- oder Triphenyl-sulfonium-lon, wobei die (C₁-C₄)-Alkylreste und die Phenylreste gegebenenfalls einfach oder mehrfach mit gleichen oder verschiedenen Resten aus der Gruppe Halogen, wie F, Cl, Br oder I, (C₁-C₂)-Alkyl, (C₁-C₂)-Haloalkyl, (C₃-C₄)-Cycloalkyl, (C₁-C₂)-Alkoxy und (C₁-C₂)-Haloalkoxy substituiert sind, oder
(g) ein Tri-((C₁-C₄)-alkyl)-oxonium-Ion, wobei die (C₁-C₄)-Alkylreste gegebenenfalls einfach oder mehrfach mit gleichen oder verschiedenen Resten aus der Gruppe Halogen, wie F, Cl, Br oder I, (C₁-C₂)-Alkyl, (C₁-C₂)-Haloalkyl, (C₃-C₄)-Cycloalkyl, (C₁-C₂)-Alkoxy und (C₁-C₂)-Haloalkoxy substituiert sind, oder
(h) ein Kation aus der Reihe der folgenden heterocyclischen Verbindungen, wie beispielsweise Pyridin, Chinolin, 2-Methylpyridin, 3-Methylpyridin, 4-Methylpyridin, 2,4-Dimethylpyridin, 2,5-Dimethylpyridin, 2,6-Dimethylpyridin, 5-Ethyl-2-methylpyridin, Piperidin, Pyrrolidin, Morpholin, Thiomorpholin, Pyrrol, Imidazol, 1,5-Diazabicyclo[4.3.0]non-5-en (DBN), 1,8-Diazabicyclo[5.4.0]undec-7-en (DBU)
ist,
und n einer Zahl 1, 2 oder 3 entspricht.

3. Verbindungen gemäß Anspruch 1, **dadurch gekennzeichnet, dass** das Kation M
ein Kalium-Ion, ein Lithium-Ion, ein Magnesium-Ion, ein Calcium-Ion, ein NH₄⁺-Ion, ein (2-Hydroxyeth-1-yl)ammonium-lon, Bis-N,N-(2-hydroxyeth-1-yl)ammonium-lon, Tris-N,N,N-(2-hydroxyeth-1-yl)ammonium-Ion, ein Methylammonium-Ion, ein Dimethylammonium-Ion, ein Trimethylammonium-Ion, ein Tetramethylammonium-Ion, ein Ethylammonium-Ion, ein Diethylammonium-Ion, ein Triethylammonium-Ion, ein Tetraethylammonium-Ion ein Isopropylammonium-Ion, ein Diisopropylammonium-Ion, ein Tetrapropylammonium-Ion, ein Tetrabutylammonium-Ion, ein 2-(2-Hydroxyeth-1-oxy)eth-1-yl-ammonium-lon, ein Di-(2-hydroxyeth-1-yl)-ammonium-lon, ein Trimethylbenzylammonium-Ion, ein Tri-((C₁-C₄)-alkyl)-sulfonium-lon, oder ein Tri-((C₁-C₄)-alkyl)-oxonium-Ion, ein Benzylammonium-Ion, ein 1-Phenylethylammonium-lon, ein 2-Phenylethylammonium-lon, ein Diisopropylethylammonium-Ion, ein Pyridinium-Ion, ein Piperidinium-Ion, ein Imidazolium-Ion, ein Morpholinium-Ion, ein 1,8-Diazabicyclo[5.4.0]undec-7-enium-lon, ein Diethanolamin-Ion, ein Ethanlolamin-Ion, ein Trisethanolamin-Ion, ein Cholinium-Ion, ein Chlorcholinium-Ion, oder ein Acetylcholinium-Ion ist, und n einer Zahl 1 oder 2 entspricht.

4. Verbindungen gemäß Anspruch 1, **dadurch gekennzeichnet, dass** das Kation M ein Kalium-Ion, ein Magnesium-Ion, ein Calcium-Ion, oder ein NH₄⁺-Ion ist, und n einer Zahl 1 oder 2 entspricht.

5. Verbindungen gemäß Anspruch 1, **dadurch gekennzeichnet, dass** das Kation M ein Kalium-Ion ist, und n gleich 1 ist.

6. Verfahren zur Herstellung von Verbindungen des Anspruchs 1.

7. Verfahren zum Bekämpfen von unerwünschtem Pflanzenwuchs, **dadurch gekennzeichnet, dass** man mindestens eine Verbindung gemäß einem der Ansprüche 1 bis 5 auf unerwünschte Pflanzen und/oder ihren Lebensraum einwirken lässt.

8. Verwendung von mindestens einer Verbindung gemäß einem der Ansprüche 1 bis 5 zum Bekämpfen von unerwünschten Pflanzen.

9. Herbizides Mittel, **gekennzeichnet durch** einen Gehalt an einer Verbindung gemäß einem der Ansprüche 1 bis 5 und üblichen Streckmitteln und/oder oberflächenaktiven Mitteln.
